# EUROPÄISCHE PATENTSCHRIFT

(11) **EP 3 345 017 B1**
(45) Veröffentlichungstag und Bekanntmachung des Hinweises auf die Patenterteilung: **06.03.2019**
(21) Anmeldenummer: 17767793.7
(22) Anmeldetag: 11.09.2017
(51) Int. Cl.: G01S 17/42, G01S 17/93, G01S 7/00, G01S 7/48

(54) **LASER-SCANNER ZUR ABSTANDSMESSUNG BEI KRAFTFAHRZEUGEN**
LASER SCANNER FOR MEASURING DISTANCES FROM VEHICLES
SCANNER LASER DESTINÉ À LA MESURE DE DISTANCE DANS LE CAS DE VÉHICULES À MOTEUR

(30) Priorität: 10.09.2016 DE 102016010985
(43) Veröffentlichungstag der Anmeldung: 11.07.2018
(73) Patentinhaber: Blickfeld GmbH, 80339 München (DE)
(72) Erfinder: PETIT, Florian, 81247 München (DE)
(74) Vertreter: Neusser, Sebastian
(86) Internationale Anmeldenummer: PCT/EP2017/072695
(87) Internationale Veröffentlichungsnummer: WO 2018/046714

(56) Entgegenhaltungen:
- WO-A1-2016/138585
- DE-A1- 19 910 667
- DE-A1-102014 223 900
- DE-A1-102016 011 647
- US-A- 5 283 622
- US-A1- 2016 047 895
- US-B1- 6 246 502
- US-B1- 9 383 753
- US-B1- 9 423 498

## Beschreibung

### TECHNISCHES GEBIET

Verschiedene Ausführungsformen betreffen einen Laserscanner. Insbesondere betreffen verschiedene Ausführungsformen das Ansteuern des Laserscanners in Abhängigkeit eines Fahrtzustands eines Fahrzeugs, beispielsweise eines Personenkraftfahrzeugs.

### HINTERGRUND

Die DE 10 2014 223 900 A1 beschreibt ein Fahrerassistenzsystem eines Fahrzeugs, das einen Laserscanner mit Laser, eine Sensoreinheit und eine Auswerteeinheit umfasst. Der Laser erzeugt einen gerichteten Laserstrahl, und die Sensoreinheit erfasst die vom Laserstrahl bewirkte Rückstrahlung. Dabei sind eine Abtastgeschwindigkeit, eine Abtastauflösung, eine Abtastreichweite und/oder ein Abtastwinkelbereich des Laserscanners von der Geschwindigkeit des Fahrzeugs abhängig. Die Abtastreichweite eines vorderen abgetasteten Bereichs kann bei größeren Geschwindigkeiten des Fahrzeugs größer sein als bei kleineren Geschwindigkeiten. Der Laserscanner kann eine Distanz zu einer seitlichen Abgrenzung bestimmen.

Die WO 2016/138585 A1 offenbart einen Laser, um den Boden oder ein Ziel von einer fliegenden Plattform aus oder von einer auf dem Boden befindlichen Plattform aus abzutasten, wobei eine Time-of-Flight gemessen wird. Bei einigen Ausführungsformen werden Änderungen bezüglich der Flughöhe und des Rollwinkels kompensiert.

Die DE 199 10 667 A1 betrifft eine Vorrichtung mit einem Lasersensor für ein Kraftfahrzeug, welche eine Einrichtung zum Verschwenken eines vom Lasersensor emittierbaren Laserstrahls umfasst. Dabei kann die maximale Leistung des Lasersensors und/oder der Leistungsverlauf über den Scanbereich abhängig von der Fahrzeuggeschwindigkeit gewählt werden.

Die US 5 283 622 A beschreibt eine Vorrichtung mit einem Laser, die in einem Fahrzeug installiert ist, um den Abstand zu einem Vorderfahrzeug zu messen, wobei auch die Geschwindigkeit des Fahrzeugs berücksichtigt wird.

Die US 6,246,502 B1 offenbart eine Vorrichtung, welche einen Laserstrahl abstrahlt und ein Vorderfahrzeug durch einen reflektierten Strahl erfasst, wobei auch eine zweidimensionale Zeilenabtastung eingesetzt wird. Die US 2016/0047895 betrifft ein LADAR-System mit geschlossenem Regelkreis und dynamischen Abtastmustern, wobei zwei MEMS-Spiegel (einer bezüglich der X-Achse und einer bezüglich der Y-Achse) eingesetzt werden, um den Laserstrahl zu lenken.

Die Abstandsmessung von Objekten ist in verschiedenen Technologiefeldern erstrebenswert. Zum Beispiel kann es im Zusammenhang mit Anwendungen des autonomen Fahrens erstrebenswert sein, Objekte im Umfeld von Fahrzeugen zu erkennen und insbesondere einen Abstand zu den Objekten zu ermitteln.

Eine Technik zur Abstandsmessung von Objekten ist die sogenannte LIDAR-Technologie (engl. Light detection and ranging; manchmal auch LADAR). Dabei wird gepulstes Laserlicht von einem Emitter ausgesendet. Die Objekte im Umfeld reflektieren das Laserlicht. Diese Reflexionen können anschließend gemessen werden. Durch Bestimmung der Laufzeit des Laserlichts kann ein Abstand zu den Objekten bestimmt werden.

Um die Objekte im Umfeld ortsaufgelöst zu erkennen, kann es möglich sein, das Laserlicht zu scannen. Je nach Abstrahlwinkel des Laserlichts können dadurch unterschiedliche Objekte im Umfeld erkannt werden.

In manchen Anwendungsfällen werden LIDAR-Techniken in Fahrzeugen, beispielsweise Personenkraftfahrzeugen, eingesetzt. Damit können zum Beispiel Techniken des autonomen Fahrens implementiert werden. Im Allgemeinen sind verschiedene Fahrerassistenzfunktionalitäten basierend auf LIDAR-Daten mit Abstands- bzw. Tiefeninformation denkbar.

Jedoch weisen herkömmliche Laserscanner bestimmte Einschränkungen und Nachteile auf. Zum Beispiel ist es oftmals möglich, dass der Betriebsmodus des Laserscanners beispielsweise aufgrund der Hardwaregeometrie des Laserscanners fest vorgegeben ist. Je nach Fahrtzustand des Fahrzeugs kann es dann zu Ungenauigkeiten bei der Abstandsmessung von Objekten im Umfeld kommen.

### ZUSAMMENFASSUNG

Deshalb besteht ein Bedarf für verbesserte Techniken zur Abstandsmessung von Objekten basierend auf Laserlicht. Insbesondere besteht ein Bedarf für solche Techniken, die zumindest einige der oben genannten Einschränkungen und Nachteile lindern oder beheben.

Diese Aufgabe wird von den Merkmalen der unabhängigen Patentansprüche gelöst. Die abhängigen Patentansprüche definieren Ausführungsformen.

In einem Beispiel umfasst eine Vorrichtung einen Laserscanner. Der Laserscanner weist eine Laserlichtquelle auf. Der Laserscanner ist eingerichtet, um Laserlicht aus der Laserlichtquelle entlang einer ersten Scanachse zu scannen. Die Vorrichtung umfasst auch eine Schnittstelle, die eingerichtet ist, um Steuerdaten zu empfangen. Die Steuerdaten sind indikativ für einen Fahrtzustand des Fahrzeugs. Die Vorrichtung umfasst auch mindestens eine Recheneinheit. Die mindestens eine Recheneinheit ist eingerichtet, um den Laserscanner anzusteuern, um in Abhängigkeit des Fahrtzustands des Fahrzeugs einen aktiven Betriebsmodus aus einer Vielzahl von Betriebsmodi auszuwählen. Die mindestens eine Recheneinheit ist weiterhin eingerichtet, um basierend auf dem Laserlicht eine Abstandsmessung von Objekten im Umfeld der Vorrichtung durchzuführen.

In einem Beispiel umfasst ein Verfahren das Scannen von Laserlicht mittels eines Laserscanners entlang einer ersten Scanachse. Das Verfahren umfasst auch das Empfangen von Steuerdaten. Die Steuerdaten sind indikativ für einen Fahrtzustand eines Fahrzeugs. Das Verfahren umfasst auch das Ansteuern des Laserscanners, um in Abhängigkeit des Fahrtzustands des Fahrzeugs einen aktiven Betriebsmodus aus einer Vielzahl von Betriebsmodi auszuwählen. Das Verfahren umfasst weiterhin das Durchführen einer Abstandsmessung von Objekten im Umfeld basierend auf dem Laserlicht.

Die Abstandsmessung kann mit dem aktiven Betriebsmodus durchgeführt werden. Die Vielzahl von Betriebsmodi können den Betrieb des Laserscanners variieren.

In einem Beispiel umfasst ein Fahrzeug eine Vorrichtung mit einem Laserscanner. Der Laserscanner weist eine Laserlichtquelle auf. Der Laserscanner ist eingerichtet, um Laserlicht aus der Laserlichtquelle entlang einer ersten Scanachse zu scannen. Die Vorrichtung umfasst auch eine Schnittstelle, die eingerichtet ist, um Steuerdaten zu empfangen. Die Steuerdaten sind indikativ für einen Fahrtzustand des Fahrzeugs. Die Vorrichtung umfasst auch mindestens eine Recheneinheit. Die mindestens eine Recheneinheit ist eingerichtet, um den Laserscanner anzusteuern, um in Abhängigkeit des Fahrtzustands des Fahrzeugs einen aktiven Betriebsmodus aus einer Vielzahl von Betriebsmodi auszuwählen. Die mindestens eine Recheneinheit ist weiterhin eingerichtet, um basierend auf dem Laserlicht eine Abstandsmessung von Objekten im Umfeld der Vorrichtung durchzuführen.

Eine Vorrichtung umfasst ein LIDAR-System mit einer Laserlichtquelle, wobei das LIDAR-System eingerichtet ist, um Reflektionen von Laserlicht aus der Laserlichtquelle entlang einer ersten Achse ortsaufgelöst zu überwachen. Die Vorrichtung umfasst auch eine Schnittstelle, die eingerichtet ist, um Steuerdaten zu empfangen, die indikativ für einen Fahrtzustand eines Fahrzeugs ist. Die Vorrichtung umfasst ferner mindestens eine Recheneinheit, die eingerichtet ist, um das LIDAR-System anzusteuern, um in Abhängigkeit vom Fahrtzustand des Fahrzeugs einen aktiven Betriebsmodus aus einer Vielzahl von Betriebsmodi auszuwählen. Dabei ist die mindestens eine Recheneinheit weiterhin eingerichtet, um basierend auf dem Laserlicht eine Abstandsmessung von Objekten im Umfeld der Vorrichtung durchzuführen. Beispielsweise könnte die Vorrichtung ein Flash-LIDAR-System umfassen.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### KURZE BESCHREIBUNG DER FIGUREN

FIG. 1 illustriert schematisch eine Vorrichtung gemäß verschiedener Ausführungsformen mit einem Laserscanner und einer Schnittstelle, die eingerichtet ist um Steuerdaten zu empfangen, die indikativ für einen Fahrtzustand eines Fahrzeugs sind.
FIG. 2 illustriert schematisch den Laserscanner gemäß verschiedener Ausführungsformen.
FIG. 3 ist ein Flussdiagramm eines Verfahrens gemäß verschiedener Ausführungsformen.
FIG. 4 illustriert schematisch die Steuerdaten gemäß verschiedener Ausführungsformen.
FIG. 5 illustriert schematisch den Fahrtzustand des Fahrzeugs gemäß verschiedener Ausführungsformen.
FIG. 6 ist eine schematische Seitenansicht eines Fahrzeugs mit einer Vorrichtung mit einem Laserscanner gemäß verschiedener Ausführungsformen, wobei FIG. 6 eine vertikale Scanachse illustriert.
FIG. 7 ist eine schematische Aufsicht eines Fahrzeugs mit einer Vorrichtung mit einem Laserscanner gemäß verschiedener Ausführungsformen, wobei FIG. 7 eine horizontale Scanachse illustriert.
FIG. 8 illustriert einen durch die vertikale Scanachse und die horizontale Scanachse definierten Scanbereich gemäß verschiedener Ausführungsformen, dessen Abmessung in Abhängigkeit eines Betriebszustands des Laserscanners variiert.
FIG. 9 illustriert einen durch die vertikale Scanachse und die horizontale Scanachse definierten Scanbereich gemäß verschiedener Ausführungsformen, dessen Abmessung in Abhängigkeit eines Betriebszustands des Laserscanners variiert.
FIG. 10 illustriert einen durch die vertikale Scanachse und die horizontale Scanachse definierten Scanbereich gemäß verschiedener Ausführungsformen, dessen Ausrichtung in Abhängigkeit eines Betriebszustands des Laserscanners variiert.
FIG. 11 illustriert einen durch die vertikale Scanachse und die horizontale Scanachse definierten Scanbereich gemäß verschiedener Ausführungsformen, dessen Abmessung in Abhängigkeit eines Betriebszustands des Laserscanners variiert.
FIG. 12 illustriert schematisch eine Scanpunktdichte entlang der vertikalen Scanachse gemäß verschiedener Ausführungsformen, wobei die Scanpunktdichte in Abhängigkeit eines Betriebszustands des Laserscanners variiert.
FIG. 13 illustriert schematisch eine Scanpunktdichte entlang der vertikalen Scanachse gemäß verschiedener Ausführungsformen, wobei die Scanpunktdichte in Abhängigkeit eines Betriebszustands des Laserscanners variiert.
FIG. 14 illustriert schematisch eine Pulsfolge des Laserlichts gemäß verschiedener Ausführungsformen, wobei die Pulsenergie der Pulse der Pulsfolge und die Wiederholrate der Pulse der Pulsfolge in Abhängigkeit eines Betriebszustands des Laserscanners variiert.
FIG. 15 illustriert schematisch eine Faser, die eine Umlenkeinheit des Laserscanners implementiert.
FIG. 16 illustriert schematisch eine Transversalmode der Faser gemäß FIG. 15.
FIG. 17 illustriert schematisch eine Torsionsmode der Faser gemäß FIG. 15.
FIG. 18 illustriert schematisch einen Spiegel, der mit einem beweglichen Ende der Faser gemäß FIG. 15 verbunden ist.
FIG. 19 illustriert schematisch einen Spiegel, der mit einem beweglichen Ende der Faser gemäß FIG. 15 verbunden ist.
FIG. 20 illustriert schematisch eine Überlagerungsfigur, die durch resonanter Anregung zweier Freiheitsgrade der Bewegung der Faser gemäß FIG. 15 erhalten wird.
FIG. 21 illustriert schematisch die Änderung der Scanamplitude während eines Scanvorgangs für einen Freiheitsgrad der Bewegung der Faser gemäß FIG. 15.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden verschiedene Techniken zum Scannen von Laserlicht beschrieben. Die nachfolgend beschriebenen Techniken können zum Beispiel das eindimensionale oder zweidimensionale Scannen von Laserlicht ermöglichen. Das Scannen kann wiederholtes Aussenden des Laserlichts unter unterschiedlichen Abstrahlwinkeln bezeichnen. Das wiederholt Umsetzen eines bestimmten Abstrahlwinkels kann eine Wiederholrate des Scannens bestimmen. Die Menge der Abstrahlwinkel kann einen Scanbereich bzw. einen Bildbereich definieren. Das Scannen kann das wiederholte Abtasten von unterschiedlichen Scanpunkten in der Umgebung mittels des Laserlichts bezeichnen. Für jeden Scanpunkt können bestimmte Daten ermittelt werden.

Das wiederholte Abscannen des Scanbereichs entspricht einer Bildwiderholrate. Typischerweise liegt die Bildwiderholrate im Bereich von 5 Hz - 50 Hz. Dabei kann aber für unterschiedliche Bildwiderholraten dieselbe Scanfrequenz verwendet werden, die z.B. durch die Eigenfrequenz einer elastischen Aufhängung einer Umlenkeinheit im Falle eines resonanten Scanners festgelegt sein kann.

Zum Beispiel kann kohärentes oder inkohärentes Laserlicht verwendet werden. Es wäre möglich, polarisiertes oder unpolarisiertes Laserlicht zu verwenden. Beispielsweise wäre es möglich, dass das Laserlicht gepulst verwendet wird. Zum Beispiel können kurze Laserpulse mit Pulsdauern im Bereich von Femtosekunden oder Pikosekunden oder Nanosekunden verwendet werden. Beispielsweise kann eine Pulsdauer im Bereich von 0,5 - 3 Nanosekunden liegen. Das Laserlicht kann eine Wellenlänge im Bereich von 700 - 1800 nm aufweisen.

In verschiedenen Beispielen ist der Scanbereich eindimensional definiert. Dies kann beispielsweise bedeuten, dass der Laserscanner das Laserlicht mittels einer Umlenkeinheit nur entlang einer einzigen Scanachse scannt. In anderen Beispielen ist der Scanbereich zweidimensional definiert. Dies kann beispielsweise bedeuten, dass der Laserscanner das Laserlicht mittels der Umlenkeinheit entlang einer ersten Scanachse und entlang einer zweiten Scanachse scannt. Die erste Scanachse und die zweite Scanachse sind dabei verschieden voneinander. Beispielsweise könnten die erste und zweite Scanachse orthogonal zueinander orientiert sein.

In manchen Beispielen kann ein zweidimensionaler Scanbereich durch eine einzige Umlenkeinheit mit zwei oder mehr Freiheitsgraden der Bewegung implementiert werden. Dies kann bedeuten, dass eine erste Bewegung der Umlenkeinheit gemäß der ersten Scanachse und eine zweite Bewegung der Umlenkeinheit gemäß der zweiten Scanachse beispielsweise durch einen Aktuator bewirkt wird, wobei die erste Bewegung und die zweite Bewegung örtlich und zeitlich überlagert sind.

In anderen Beispielen kann der zweidimensionale Scanbereich durch mehr als eine einzige Umlenkeinheit implementiert werden. Dann wäre es zum Beispiel möglich, dass für zwei Umlenkeinheit jeweils ein einziger Freiheitsgrad der Bewegung angeregt wird. Das Laserlicht kann zunächst von einer ersten Umlenkeinheit abgelenkt werden und dann von einer zweiten Umlenkeinheit abgelenkt werden. Die beiden Umlenkeinheiten können also im Strahlengang hintereinander angeordnet sein. Dies bedeutet, dass die Bewegungen der beiden Umlenkeinheit nicht örtlich überlagert sind. Zum Beispiel kann ein entsprechender Laserscanner zwei beabstandet voneinander angeordnete Spiegel oder Prismen aufweisen, die jeweils individuell verstellt werden können.
In verschiedenen Beispielen ist es möglich, dass der Laserscanner unterschiedliche Freiheitsgrade der Bewegung zum Scannen des Laserlichts resonant betreibt. Ein solcher Laserscanner wird manchmal auch als resonanter Laserscanner bezeichnet. Insbesondere kann ein resonanter Laserscanner verschieden sein von einem Laserscanner, der zumindest einen Freiheitsgrad der Bewegung schrittweise (engl. stepped) betreibt. In manchen Beispielen wäre es zum Beispiel möglich, dass eine erste Bewegung - die einer ersten Scanachse entspricht - und eine zweite Bewegung - die einer zweiten Scanachse entspricht, die verschieden von der ersten Scanachse ist - jeweils resonant bewirkt werden.
In verschiedenen Beispielen wird zum Scannen des Laserlichts ein bewegliches Ende einer Faser als Umlenkeinheit verwendet. Beispielsweise können Lichtfasern verwendet werden, die auch als Glasfasern bezeichnet werden. Es ist aber nicht notwendig, Lichtfasern zu verwenden. Dabei ist es aber nicht erforderlich, dass die Fasern aus Glas hergestellt sind. Die Fasern können zum Beispiel aus Kunststoff, Glas oder einem anderen Material hergestellt sein. Beispielsweise können die Fasern aus Quarzglas oder Silizium hergestellt sein. Beispielsweise können die Fasern aus einem Silizium oder Silizium-auf-Isolator (engl. silicon on insulator, SOI) Wafer freigestellt werden. Beispielsweise können die Fasern ein 70 GPa Elastizität-Modul aufweisen oder ein Elastizität-Modul im Bereich von 40 GPa - 80 GPa, vorzugsweise im Bereich 60 - 75 GPa. Beispielsweise können die Fasern ein Elastizität-Modul im Bereich von 120 GPa - 200 GPa haben, z.B. von ca. 160 GPa. Beispielsweise können die Fasern bis zu 4 % Materialdehnung ermöglichen. In manchen Beispielen weisen die Fasern einen Kern auf, in welchem das eingespeiste Laserlicht propagiert und durch Totalreflektion an den Rändern eingeschlossen ist (Lichtwellenleiter). Die Faser muss aber keinen Kern aufweisen. In verschiedenen Beispielen können sogenannte Einmoden-Lichtfasern (engl. single mode fibers) oder Mehrmoden-Lichtfasern (engl. multimode fibers) verwendet werden. Die verschiedenen hierin beschriebenen Fasern können zum Beispiel einen kreisförmigen Querschnitt aufweisen. Es wäre zum Beispiel möglich, dass die verschiedenen hierin beschriebenen Fasern einen Durchmesser aufweisen, der nicht kleiner als 50 µm ist, optional nicht <150 µm ist, weiter optional nicht <500 µm ist, weiter optional nicht <1 mm ist. Der Durchmesser kann aber auch < 1 mm sein, optional < 500 µm, weiter optional kleiner 150 µm. Zum Beispiel können die verschiedenen hierin beschriebenen Fasern verbiegbar bzw. krümmbar ausgestaltet sein, d.h. flexibel. Dazu kann das Material der hierin beschriebenen Fasern eine gewisse Elastizität aufweisen.
Beispielsweise könnte das bewegliche Ende der Faser in einer oder zwei Dimensionen bewegt werden. Beispielsweise wäre es möglich, dass das bewegliche Ende der Faser gegenüber einer Fixierstelle der Faser verkippt wird; dies resultiert in einer Krümmung der Faser. Dies kann einem ersten Freiheitsgrad der Bewegung entsprechen. Alternativ oder zusätzlich wäre es möglich, dass das bewegliche Ende der Faser entlang der Faserachse verdreht wird (Torsion). Dies kann einem zweiten Freiheitsgrad der Bewegung entsprechen. In den verschiedenen hierin beschriebenen Beispielen ist es jeweils möglich, eine Torsion des beweglichen Endes der Faser alternativ oder zusätzlich zu einer Krümmung des beweglichen Endes der Faser zu implementieren. In anderen Beispielen könnten auch andere Freiheitsgrade der Bewegung implementiert werden. Durch das Bewegen des beweglichen Endes der Faser kann erreicht werden, dass Laserlicht unter verschiedenen Winkeln abgestrahlt wird. Dadurch kann ein Umfeld mit dem Laserlicht gescannt werden. Je nach Amplitude der Bewegung des beweglichen Endes können unterschiedlich große Scanbereiche implementiert werden.
In verschiedenen Beispielen kann am beweglichen Ende der Faser mindestens ein optisches Element angebracht sein, beispielsweise ein Spiegel, ein Prisma und/oder eine Linse, wie etwa eine Linse mit Gradientenindex (GRIN-Linse). Mittels des optischen Elements ist es möglich, dass Laserlicht aus der Laserlichtquelle umzulenken. Beispielsweise könnte der Spiegel durch einen Wafer, etwa einen Silizium-Wafer, oder ein Glassubstrat implementiert sein. Beispielsweise könnte der Spiegel eine Dicke im Bereich von 0,05 µm - 0,1 mm aufweisen, z.B. insbesondere im Bereich von 500 µm +/-200 µm. Beispielsweise könnten die Spiegel eine Rückseitenstrukturierung mit Rippen zur Versteifung bei gleichzeitiger Reduktion des Massenträgheitsmoments aufweisen. Beispielsweise könnte der Spiegel quadratisch, rechtecksförmig, elliptisch oder kreisförmig ausgebildet sein. Beispielsweise könnte der Spiegel einen Durchmesser im Bereich von 3 mm bis 6 mm aufweisen, jedoch auch bis zu 20 mm.
In verschiedenen Beispielen können LIDAR-Techniken angewendet werden. Die LIDAR-Techniken können dazu genutzt werden, um eine ortsaufgelöste Abstandsmessung von Objekten im Umfeld durchzuführen. Zum Beispiel kann die LIDAR-Technik Laufzeitmessungen des gepulsten Laserlichts zwischen dem beweglichen Ende der Faser, dem Objekt und einem Detektor umfassen. Alternativ oder zusätzlich könnten auch Techniken der strukturierten Beleuchtung verwendet werden.

In verschiedenen Beispielen kann die LIDAR-Technik im Zusammenhang mit einer Fahrerassistenzfunktionalität für ein Kraftfahrzeug implementiert werden. Eine den Laserscanner beinhaltende Vorrichtung kann deshalb im Kraftfahrzeug angeordnet sein. Beispielsweise könnte ein tiefenaufgelöstes LIDAR-Bild erstellt werden und an ein Fahrerassistenzsystem des Kraftfahrzeugs übergeben werden. Damit können zum Beispiel Techniken des unterstützten Fahrens oder des autonomen Fahrens implementiert werden.

Verschiedenen hierin beschriebenen Beispielen liegt die Erkenntnis zugrunde, dass es erstrebenswert sein kann, den Betriebsmodus des Laserscanners in Abhängigkeit eines Fahrtzustands des Fahrzeugs auszuwählen. Der Fahrtzustand kann z.B. einen IST-Wert einer während einer Fahrt veränderlichen Eigenschaft des Fahrzeugs bzw. eines Umfelds des Fahrzeugs beschreiben. Typischerweise können sich nämlich die anzustrebenden Betriebsparameter des Laserscanners je nach Fahrtzustand des Fahrzeugs signifikant unterscheiden. Beispielsweise kann es bei der schnellen Fahrt auf einer Autobahn erstrebenswert sein, einen kleinen und nach vorne gerichteten und hochaufgelösten Scanbereich zu implementieren, um auch weit entfernte Objekte zuverlässig zu erkennen. Hingegen kann es bei der schnellen Fahrt auf einer Autobahn nicht erforderlich sein, eine besonders hohe Auflösung links und rechts von der Begrenzung der Autobahn zu erzielen. Bei der langsamen Fahrt auf einer innerstädtischen Straße kann es jedoch erstrebenswert sein, einen besonders großen Scanbereich zu implementieren, um auch links und rechts vom Kraftfahrzeug positionierte Objekte zu erkennen. Bei der langsamen Fahrt auf einer innerstädtischen Straße kann es entbehrlich sein, besonders weit entfernte Objekte - zum Beispiel weiter als 100 oder 150 m entfernt - zu erkennen.

Innerstädtischer Verkehr kann z.B. indiziert werden durch eines oder mehrere der folgenden: Straßentyp; Geschwindigkeit; Erkannte Personen oder Fahrzeuge im Umfeld; Straßenkurvigkeit; etc..

Obwohl verschiedene Beispiele hierin in Bezug auf Kraftfahrzeuge und insbesondere PKWs beschrieben werden, können entsprechende Techniken jedoch auch auf andere Fahrzeuge angewendet werden. Beispiele umfassen etwa fliegende Drohnen, Roboter, Lastkraftfahrzeuge, Schiffe, Züge, Flugzeuge, Boote, Segelboote, etc.

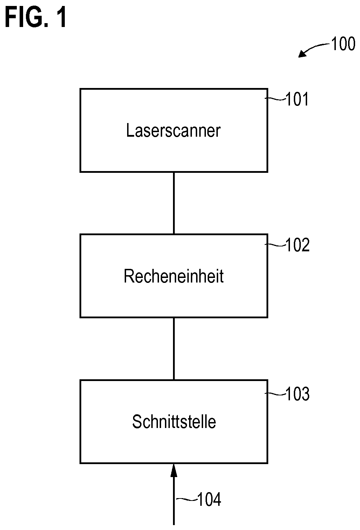

FIG. 1 illustriert Aspekte in Bezug auf eine Vorrichtung 100. Die Vorrichtung 100 umfasst einen Laserscanner 101. Der Laserscanner 101 ist eingerichtet, um Laserlicht aus einer Laserlichtquelle in einer Umgebung der Vorrichtung 100 abzustrahlen. Dabei ist der Laserscanner 101 eingerichtet, um das Laserlicht zumindest entlang einer Scanachse zu scannen. In manchen Beispielen ist der Laserscanner 101 eingerichtet, um das Laserlicht entlang einer ersten und einer zweiten Scanachse zu scannen.

Die Vorrichtung 100 umfasst auch eine Recheneinheit 102. Beispiele für eine Recheneinheit 102 umfassen einen Analogschaltkreis, eine digitale Schaltung, einen Mikroprozessor, einen FPGA und/oder einen ASIC. Die Recheneinheit 102 kann Logik implementieren. In manchen Beispielen kann die Vorrichtung 100 auch mehr als eine Recheneinheit umfassen, die die Logik verteilt implementieren.

Beispielsweise kann die Recheneinheit 102 den Laserscanner 101 ansteuern. Die Recheneinheit 102 kann beispielsweise einen oder mehrere Betriebsparameter des Laserscanner 101 einstellen. In den verschiedenen hierin beschriebenen Beispielen kann die Recheneinheit 102 unterschiedliche Betriebsmodi des Laserscanner 101 aktivieren. Ein Betriebsmodus kann dabei durch einen Satz von Betriebsparametern des Laserscanners 101 definiert sein.

Beispiele für Betriebsparameter umfassen: die Abmessung des Scanbereichs; die Ausrichtung des Scanbereichs, die zum Beispiel durch die Anordnung eines Zentrums des Scanbereichs definiert sein kann; die Scanpunktdichte, d.h. der Abstand zwischen benachbarten Abstandsmessungen; die Wiederholrate (manchmal auch als Bildwiderholrate bezeichnet) eines Scanvorgangs, der den Scanbereich definiert; die Pulsenergie von Pulsen des Laserlichts; die Wiederholrate von Pulsen des Laserlichts; ein Tastgrad (engl. duty cycle) von Pulsen des Laserlichts; eine Detektor-Blendenöffnung; etc..

Z.B. könnte innerorts bzw. bei geringen Geschwindigkeiten eine geringere Blendenöffnung des Detektors gewählt werden. Dadurch kann zwar die Reichweite der Abstandsmessung reduziert werden, da weniger sekundäres Laserlicht gesammelt werden kann. Andererseits kann jedoch eine besonders große Reichweite der Abstandsmessung innerorts bzw. bei geringen Geschwindigkeiten nicht erforderlich sein. Gleichzeitig kann durch die geringere Blendenöffnung erreicht werden, dass Störeinflüsse beispielsweise durch andere Laserscanner, reduziert werden können, da sekundäres Laserlicht besonders ortsselektiv gesammelt werden kann. Eine variable Blendenöffnung kann z.B. durch ein LCD-Matrix implementiert werden oder eine mechanisch verstellbare Blende.

Dabei kann die Recheneinheit 102 eingerichtet sein, um den jeweils aktiven Betriebsmodus in Abhängigkeit des Fahrtzustands des Fahrzeugs (in FIG. 1 nicht dargestellt), mit welchem die Vorrichtung 100 zusammenwirkt, zu bestimmen. Dazu ist die Recheneinheit 102 mit einer Schnittstelle 103 gekoppelt. Die Schnittstelle 103 erlaubt es, Steuerdaten zu empfangen, die indikativ für den Fahrtzustand des Fahrzeugs sind.

Zum Beispiel kann die Schnittstelle 103 eine Bus-Schnittstelle für einen Controller Area Network (CAN)-Bus oder einen Media Oriented Systems Transport (MOST)-BUS oder einen FlexRay-Bus implementieren. Z.B. kann die Schnittstelle 103 einen Steckkontakt implementieren.

In verschiedenen Beispielen können unterschiedliche Fahrtzustände des Fahrzeugs von der Recheneinheit 102 bei der Auswahl des aktiven Betriebsmodus des Laserscanner 101 berücksichtigt werden. Beispiele für solche Fahrtzustände umfassen: ein Straßentyp, wie zum Beispiel Autobahn, innerstädtische Straße, Landstraße, Staatsstraße; die Geschwindigkeit des Fahrzeugs, beispielsweise in Kilometer pro Stunde; ein Gierwinkel des Fahrzeugs; ein Rollwinkel des Fahrzeugs; ein Nickwinkel des Fahrzeugs; und/oder ein Höhenprofil einer Straße, beispielsweise ein Neigungsniveau der Straße.

Durch das Berücksichtigen des Fahrtzustands des Fahrzeugs bei der Auswahl des aktiven Betriebsmodus des Laserscanners kann erreicht werden, dass die Abstandsmessung der Objekte im Umfeld situationsangepasst und flexibel durchgeführt werden kann. Dadurch kann im Allgemeinen eine größere Genauigkeit für die Abstandsmessung der Objekte im Umfeld erzielt werden. Beispielsweise kann erreicht werden, dass die Abstandsmessung an die jeweiligen Erfordernisse des Fahrtzustands angepasst wird und dadurch LIDAR-Daten bereitgestellt werden, die für eine entsprechende Fahrerassistenzfunktionalität von besonderer Relevanz sind bzw. einen großen Informationsgehalt aufweisen.

Die Recheneinheit 102 ist weiterhin eingerichtet, um eine Abstandsmessung durchzuführen. Dazu kann die Recheneinheit Rohdaten vom Laserscanner 101 empfangen. Diese Rohdaten können beispielsweise eine Laufzeit von Pulsen des Laserlichts zwischen Senden und Empfangen beschreiben. Diese Rohdaten können weiterhin einen assoziierten Abstrahlwinkel des Laserlichts beschreiben. Basierend darauf kann die Recheneinheit 102 ein LIDAR-Bild erzeugen, das beispielsweise einer Punktwolke mit Tiefeninformation entspricht. Optional wäre es möglich, dass die Recheneinheit 102 z.B. eine Objekterkennung basierend auf dem LIDAR-Bild durchführt. Dann kann die Recheneinheit 102 das LIDAR-Bild ausgeben. Die Recheneinheit 102 kann wiederholt neue LIDAR-Bilder erzeugen, z.B. mit einer der Scanfrequenz entsprechenden Bildwiderholrate. Die Scanfrequenz kann z.B. im Bereich 20 - 100 Hz liegen.

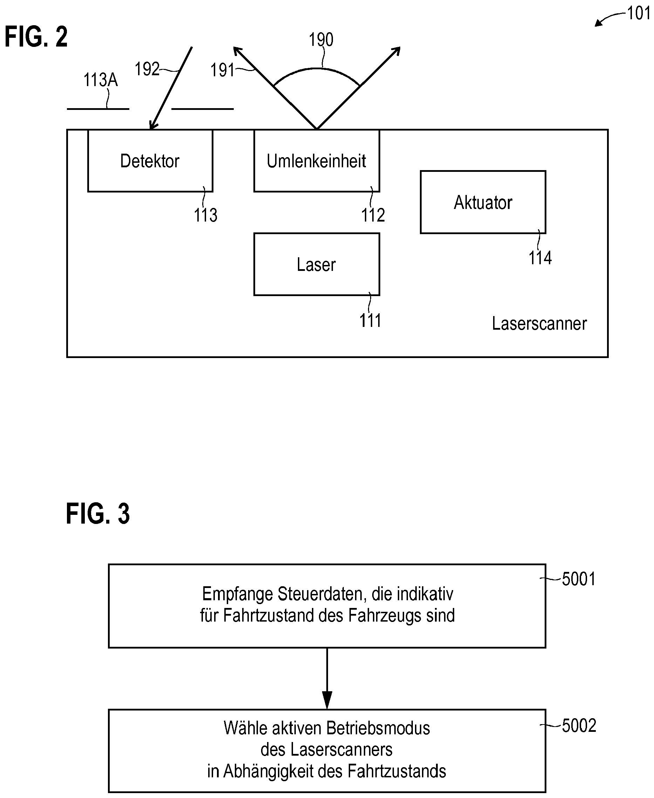

FIG. 2 illustriert Aspekte in Bezug auf den Laserscanner 101. Insbesondere illustriert FIG. 2 einen Laserscanner 101 gemäß verschiedener Beispiele in größerem Detail.

In dem Beispiel der FIG. 2 umfasst der Laserscanner 101 eine Laserlichtquelle 111. Beispielsweise kann die Laserlichtquelle 111 ein Diodenlaser sein. In manchen Beispielen kann die Laserlichtquelle 111 ein Oberflächenemitter (engl. vertical-cavity surface-emitting laser; VCSEL) sein. Die Laserlichtquelle 111 sendet Laserlicht 191 aus, welches durch die Umlenkeinheit 112 um einen bestimmten Ablenkwinkel umgelenkt wird. In manchen Beispielen kann eine Kollimatoroptik für das Laserlicht 191 im Strahlengang zwischen der Laserlichtquelle 111 und der Umlenkeinheit 112 angeordnet sein. In anderen Beispielen könnte, alternativ oder zusätzlich, die Kollimatoroptik für das Laserlicht 191 auch im Strahlengang hinter der Umlenkeinheit 112 angeordnet sein.

Die Umlenkeinheit könnte z.B. einen Spiegel oder ein Prisma umfassen. Beispielsweise könnte die Umlenkeinheit ein rotierendes Mehrfacetten-Prisma umfassen.

Der Laserscanner 101 kann eine oder mehrere Scanachsen implementieren (in FIG. 2 ist nur eine Scanachse dargestellt, nämlich in der Zeichenebene). Durch das Bereitstellen von mehreren Scanachsen kann ein zweidimensionaler Scanbereich implementiert werden.

Ein zweidimensionaler Scanbereich kann es ermöglichen, die Abstandsmessung der Objekte im Umfeld mit großem Informationsgehalt durchzuführen. Typischerweise kann derart neben einer horizontalen Scanachse auch eine vertikale Scanachse - in Bezug auf ein globales Koordinatensystem, in welchem das Kraftfahrzeug angeordnet ist - implementiert werden. Insbesondere im Vergleich zu Referenzimplementierungen, die eine vertikale Auflösung nicht durch Scannen, sondern vielmehr durch ein Array von mehreren Laserlichtquellen, die gegeneinander versetzt sind und unter unterschiedlichen Winkeln auf eine Umlenkeinheit Laserlicht emittieren, kann derart ein weniger komplexes System mit weniger Bauteilen und/oder eine höhere vertikale Auflösung erreicht werden. Außerdem kann es in verschiedenen Beispielen möglich sein, entsprechende Betriebsparameter des Laserscanners 101, die mit der vertikalen Scanachse assoziiert sind, flexibel zum Beispiel in Abhängigkeit des Fahrtzustands des Fahrzeugs anzupassen. Dies ist oftmals bei einer festen Verbauung eines Arrays von Laserlichtquellen nicht oder nur eingeschränkt möglich.

Zum Scannen des Laserlichts 191 weist die Umlenkeinheit 112 mindestens einen Freiheitsgrad der Bewegung auf. Jeder Freiheitsgrad der Bewegung kann eine entsprechende Scanachse definieren. Die entsprechende Bewegung kann durch einen Aktuator 114 betätigt bzw. angeregt werden.

Um mehrere Scanachsen zu implementieren, wäre es in manchen Beispielen möglich, dass mehr als eine Umlenkeinheit vorhanden ist (in FIG. 2 nicht dargestellt). Dann kann das Laserlicht 191 sequenziell die verschiedenen Umlenkeinheiten durchlaufen. Jede Umlenkeinheit kann einen entsprechenden zugeordneten Freiheitsgrad der Bewegung aufweisen, der einer zugehörigen Scanachse entspricht. Manchmal wird eine solche Anordnung als Scannersystem bezeichnet.

Um mehrere Scanachsen zu implementieren, wäre es in weiteren Beispielen möglich, dass die einzelne Umlenkeinheit 112 mehr als einen einzigen Freiheitsgrad der Bewegung aufweist. Zum Beispiel könnte die Umlenkeinheit 112 mindestens zwei Freiheitsgrade der Bewegung aufweisen. Entsprechende Bewegungen können durch den Aktuator 114 angeregt werden. Z.B. kann der Aktuator 114 die entsprechenden Bewegungen individuell, aber zeitparallel oder gekoppelt anregen. Dann wäre es möglich, durch Bewirken der Bewegungen in zeitlicher und örtlicher Überlagerung zwei oder mehr Scanachsen zu implementieren.

Durch das Überlagern der ersten Bewegung und der zweiten Bewegung im Ortsraum und im Zeitraum kann eine besonders hohe Integration des Laserscanners 101 erreicht werden. Dadurch kann der Laserscanner 101 mit geringem Bauraum implementiert werden. Dies ermöglicht eine flexible Positionierung des Laserscanners 101 im Kraftfahrzeug. Außerdem kann erreicht werden, dass der Laserscanner 101 vergleichsweise wenig Bauteile aufweist und damit robust und kostengünstig hergestellt werden kann.

Beispielsweise könnte ein erster Freiheitsgrad der Bewegung der Rotation eines Spiegels entsprechen und ein zweiter Freiheitsgrad der Bewegung einer Verkippung des Spiegels entsprechen. Beispielsweise könnte ein erster Freiheitsgrad der Rotation eines Mehrfacetten-Prismas entsprechen und ein zweiter Freiheitsgrad der Verkippung des Mehrfacetten-Prismas entsprechen. Beispielsweise könnte ein erster Freiheitsgrad der Transversalmode einer Faser entsprechen und ein zweiter Freiheitsgrad der Bewegung der Torsionsmode der Faser entsprechen. Die Faser könnte ein entsprechendes bewegliches Ende aufweisen. Beispielsweise könnte ein erster Freiheitsgrad der Bewegung einer ersten Transversalmode einer Faser entsprechen und ein zweiter Freiheitsgrad der Bewegung einer zweiten Transversalmode der Faser entsprechen, die z.B. orthogonal zur ersten Transversalmode ist.

In manchen Beispielen ist es möglich, dass sowohl die erste Bewegung gemäß einem ersten Freiheitsgrad der Bewegung, der einer ersten Scanachse entspricht, als auch die zweite Bewegung gemäß einem zweiten Freiheitsgrad der Bewegung, der einer zweiten Scanachse entspricht, resonant bewirkt wird. In anderen Beispielen ist es möglich, dass zumindest eine der ersten Bewegung und der zweiten Bewegung nicht resonant bewirkt wird, sondern vielmehr diskret bzw. gestuft bewirkt wird.

Wenn sowohl die erste Bewegung, als auch die zweite Bewegung resonant bewirkt werden, kann eine sogenannte Überlagerungs-Figur, manchmal auch Lissajous-Figur, für das Scannen entlang der ersten Scanachse und der zweiten Scanachse erhalten werden. Wenn sowohl die erste Bewegung, als auch die zweite Bewegung resonant bewirkt werden, kann ein besonders robustes und einfaches System für den Laserscanner umgesetzt werden. Beispielsweise kann der Aktuator einfach implementiert werden.

Der Aktuator 114 ist typischerweise elektrisch betreibbar. Der Aktuator 114 könnte magnetische Komponenten und/oder piezoelektrische Komponenten umfassen. Beispielsweise könnte der Aktuator eine Rotationsmagnetfeldquelle umfassen, die eingerichtet ist, um ein als Funktion der Zeit rotierendes magnetisches Feld zu erzeugen. Der Aktuator könnte auch eine Linearmagnetfeldquelle umfassen, wobei die Stärke des magnetischen Felds variiert wird. Dadurch könnte ein variables Drehmoment auf eine Remanenzmagnetisierung eines magnetischen Materials aufgebracht werden. Der Aktuator 114 könnte zum Beispiel Biegepiezokomponenten umfassen. Z.B. könnte dabei durch Verwendung einer AC-Komponente des entsprechenden Treibersignals mindestens eine Bewegung von mindestens einer Umlenkeinheit resonant bewirkt werden. Dazu kann die Frequenz des AC-Treibersignals abgestimmt werden auf die Eigenfrequenz einer Faser etc. als elastische Aufhängung der mindestens einen Umlenkeinheit. Es wäre auch möglich, dass das Treibersignal eine DC-Komponente aufweist: Dabei könnte eine bestimmte Verbiegung der Biegepiezoaktuatoren bewirkt werden oder z.B. eine bestimmte Magnetfeldstärke. Die DC-Komponente kann als Offset oder Bezugslinie einer AC-Komponente überlagert werden.

In manchen Beispielen könnte anstatt einer Umlenkeinheit 112 auch ein auf einem Substratetwa Silizium - integriert gefertigtes Array aus mehreren Emitterstrukturen - beispielsweise Lichtwellenleitern - verwendet werden, wobei die mehreren Emitterstrukturen Laserlicht in einer bestimmten Phasenbeziehung aussenden. Durch Variieren der Phasenbeziehung des Laserlichts, welches durch die verschiedenen Emitterstrukturen ausgesendet wird, kann dann ein bestimmter Abstrahlwinkel durch konstruktive und destruktive Interferenz eins gestellt werden. Solche Anordnungen werden auch manchmal als optisches Array mit Phasenbeziehung (engl. optical phased array, OPA) bezeichnet. Siehe M. J. R. Heck" Highly integrated optical phased arrays: photonic integrated circuits for optical beam shaping and beam steering" in Nanophotonics (2016).

Der Laserscanner 101 umfasst auch einen Detektor 113. Beispielsweise kann der Detektor 113 durch eine Fotodiode implementiert sein. Beispielsweise kann der Detektor 113 durch ein Fotodioden-Array implementiert sein. Beispielsweise kann der Detektor 113 ein oder mehrere Einzelphotonen-Lawinendioden (engl. single photon avalance diode, SPAD) aufweisen.

Der Detektor 113 ist eingerichtet, um von Objekten (in FIG. 2 nicht dargestellt) im Umfeld der Anordnung 100 reflektiertes sekundäres Laserlicht 192 zu detektieren. Basierend auf einer Laufzeitmessung zwischen dem Aussenden eines Pulses des primären Laserlichts 191 durch die Laserlichtquelle 111 und dem Detektieren des Pulses durch den Detektor 113 kann dann eine Abstandsmessung der Objekte durchgeführt werden. Solche Techniken könnten beispielsweise auch kombiniert werden oder ersetzt werden mit strukturierter Beleuchtung, bei der anstatt von Pulsen des Laserlichts 191 kontinuierliches Laserlicht verwendet werden kann.

In dem Beispiel der FIG. 2 weist der Detektor 113 eine eigene Blende 113A auf. In anderen Beispielen wäre es möglich, dass der Detektor 113 dieselbe Blende verwendet, die auch für das Abstrahlen des primären Laserlichts 191 verwendet wird. Dann kann eine besonders hohe Sensitivität erzielt werden.

Optional könnte der Laserscanner 101 auch eine Positioniervorrichtung aufweisen (in FIG. 2 nicht dargestellt). Die Positioniervorrichtung kann eingerichtet sein, um ein Signal auszugeben, das indikativ für den Abstrahlwinkel ist, mit welchem das Laserlicht abgestrahlt wird. Dazu wäre es zum Beispiel möglich, dass die Positioniervorrichtung eine Zustandsmessung des Aktuators 114 und/oder der Umlenkeinheit 112 vornimmt. Die Positioniervorrichtung könnte beispielsweise auch direkt das primäre Laserlicht 191 messen. Die Positioniervorrichtung kann im Allgemeinen den Abstrahlwinkel optisch messen, z.B. basierend auf dem primären Laserlicht 191 und/oder Licht einer Leuchtdiode. Beispielsweise könnte die Positioniervorrichtung einen positionssensitiven Detektor (engl. position sensitive device, PSD) aufweisen, der z.B. eine PIN-Diode, ein CCD-Array oder ein CMOS-Array aufweist. Dann könnte das primäre Laserlicht 191 und/oder Licht aus einer Leuchtdiode über die Umlenkeinheit 112 auf den PSD gerichtet werden, sodass der Abstrahlwinkel mittels des PSD gemessen werden kann. Alternativ oder zusätzlich könnte die Positioniervorrichtung auch ein Faser-Bragg-Gitter aufweisen, dass zum Beispiel innerhalb der Faser, die die Umlenkeinheit 112 ausbildet, angeordnet ist: durch eine Krümmung und/oder Torsion der Faser kann sich die Länge des Faser-Bragg-Gitters ändern und dadurch die Reflektivität für Licht einer bestimmten Wellenlänge verändert werden. Dadurch kann der Bewegungszustand der Faser gemessen werden. Daraus lässt sich auf den Abstrahlwinkel zurück schließen.

FIG. 3 ist ein Flussdiagramm eines Verfahrens gemäß verschiedener Beispiele. Beispielsweise könnte das Verfahren gemäß FIG. 3 durch eine Vorrichtung 100, wie sie voranstehend in Bezug auf die FIGs. 1 und 2 beschrieben wurde, implementiert werden.

Zunächst erfolgt in Block 5001 das Empfangen von Steuerdaten. Die Steuerdaten sind indikativ für einen Fahrtzustand eines Fahrzeugs. Beispielsweise könnten die Steuerdaten über eine Bus-Datenverbindung wie beispielsweise einen CAN-Bus oder einen MOST-Bus oder einen FlexRay-Bus empfangen werden. Beispielsweise könnten die Steuerdaten über eine paketierte Datenverbindung empfangen werden. Es wäre aber auch möglich, dass die Steuerdaten als analoges Signal codiert sind.

Dann erfolgt in Block 5002 das Auswählen eines aktiven Betriebsmodus eines Laserscanners in Abhängigkeit des Fahrtzustands, wie er von den Steuerdaten in Block 5001 indiziert wird.

Dabei kann zum Beispiel mittels einer Nachschlagetabelle oder anderweitig eine bestimmte Zuordnung zwischen einem oder mehreren Fahrtzuständen des Fahrzeugs und dem jeweils aktivierten Betriebsmodus des Laserscanners implementiert werden. Zum Beispiel können bestimmte logische Verknüpfungen zwischen verschiedenen Fahrtzuständen des Fahrzeugs berücksichtigt werden.

Dann kann optional das Scannen von Laserlicht - beispielsweise gepulstem Laserlicht - entlang einer ersten Scanachse und optional entlang einer zweiten Scanachse in Übereinstimmung mit dem aktivierten Betriebsmodus des Laserscanners erfolgen.

Dann kann optional eine Abstandsmessung von Objekten im Umfeld durchgeführt werden. Dazu könnten z.B. Laufzeitmessungen von Pulsen des Laserlichts berücksichtigt werden. Es könnten aber auch Techniken der strukturierten Beleuchtung verwendet werden.

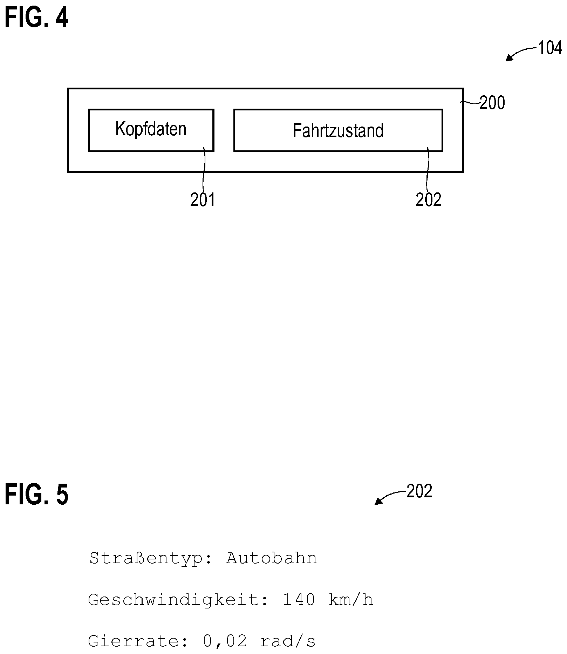

FIG. 4 illustriert Aspekte in Bezug auf Steuerdaten 104, welche indikativ für einen Fahrtzustand eines Fahrzeugs sind. In dem Beispiel der FIG. 4 sind die Steuerdaten 104 digital codiert. In dem Beispiel der FIG. 4 sind die Steuerdaten 104 als Datenpakete 200 implementiert. Ein solches Datenpaket 200 umfasst Kopfdaten 201 (engl. header) und umfasst weiterhin Nutzdaten (engl. payload data). Die Nutzdaten sind indikativ für den Fahrtzustand 202 des Fahrzeugs.

FIG. 5 illustriert Aspekte in Bezug auf den Fahrtzustand 202 des Fahrzeugs. In dem Beispiel der FIG. 5 ist der Fahrtzustand 202 des Fahrzeugs durch drei Kriterien klassifiziert. In anderen Beispielen könnten auch weniger oder mehr Kriterien zur Klassifikation des Fahrtzustands verwendet werden. Beispielsweise könnte auch nur ein einziges Kriterium verwendet werden.

In dem Beispiel der FIG. 5 ist der Fahrtzustand 202 zunächst durch einen Straßentyp, auf welchem sich das Fahrzeug gegenwärtig bewegt, klassifiziert. Beispielsweise könnte der Straßentyp aus Kartendaten einer Navigationsdatenbank, etwa im Zusammenhang mit einem Satellitennavigationssystem, ermittelt werden. Der Straßentyp könnte zum Beispiel verschiedene Straßenklassen beschreiben, wie Autobahn (vergleiche FIG. 5), Staatsstraße, Straße innerhalb eines Ortes, Landesstraße, Bundesstraße, etc.

In dem Beispiel der FIG. 5 ist der Fahrtzustand 202 weiterhin durch eine Geschwindigkeit des Fahrzeugs klassifiziert. Die Geschwindigkeit kann zum Beispiel durch Auslesen eines Tachometers erhalten werden.

In dem Beispiel der FIG. 5 ist der Fahrtzustand 202 weiterhin durch eine Gierrate des Fahrzeugs klassifiziert. Beispielsweise könnte die Gierrate durch Auslesen eines Beschleunigungssensors erhalten werden. Alternativ oder zusätzlich zur Gierrate könnte auch der Nickwinkel oder der Rollwinkel des Fahrzeugs zur Klassifikation des Fahrtzustands verwendet werden.

Der Fahrtzustand 202 kann auch durch andere Observablen beschrieben werden, als diejenigen, die in dem Beispiel der FIG. 5 dargestellt sind. Beispiele umfassen ein Höhenprofil einer Straße, beispielsweise ein Steigungswinkel der Straße.

Weitere Beispiele für den Fahrtzustand 202 umfassen eine Wettersituation, wie beispielsweise Regen, Schnee, Nacht, Sonnenschein, Trockenheit, Luftfeuchtigkeit, Umfeldhelligkeit, usf.

Solche Beispiele für den Fahrtzustand 202 können flexibel je nach Anwendungsfall miteinander kombiniert werden.

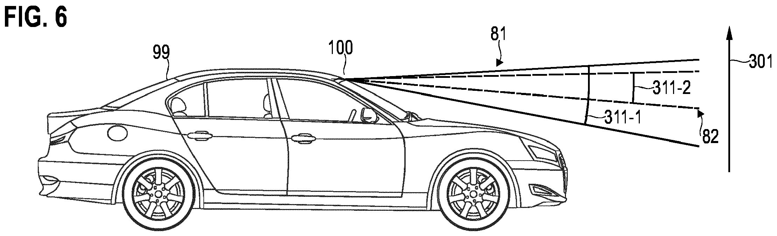

FIG. 6 illustriert Aspekte in Bezug auf eine Integration der Vorrichtung 100 in ein Kraftfahrzeug 99. In dem Beispiel der FIG. 6 ist die Vorrichtung 100 in ein Personenkraftfahrzeug (PKW) integriert. FIG. 6 ist eine Seitenansicht des PKWs 99. In dem Beispiel der FIG. 6 ist die Vorrichtung 100 in einem oberen, mittleren Bereich der vorderen Windschutzscheibe des PKWs 99 angebracht. In anderen Beispielen könnte die Vorrichtung 100 auch an anderen Positionen des PKWs 99 angebracht sein, beispielsweise im Bereich einer vorderen Stoßstange, einer hinteren Stoßstange, im Bereich eines Kühlergrills, etc.

FIG. 6 illustriert weiterhin Aspekte in Bezug auf eine vertikale Scanachse 301 des Laserscanners 100. Bei bestimmungsgemäßem Einbau der Vorrichtung 100 in den PKW 99 ist die Scanachse 301 vertikal im entsprechenden Koordinatensystem des PKWs 99 orientiert, d.h. in etwa senkrecht zur Straße.

In dem Beispiel der FIG. 6 sind zwei unterschiedliche Abmessungen 311-1, 311-2 des Scanbereichs entlang der vertikalen Scanachse 301 dargestellt. Aus dem Beispiel der FIG. 6 ist ersichtlich, dass die Abmessung 311-1 größer ist, als die Abmessung 311-2.

Beispielsweise wäre es möglich, dass die beiden Abmessungen 311-1, 311-2 jeweils mit unterschiedlichen Betriebsmodi 81, 82 des Laserscanners 101 assoziiert sind. Beispielsweise könnte die Abmessung 311-1 (durchgezogene Linie in FIG. 6) im Zusammenhang mit einem Betriebsmodus 81, der einer Fahrt auf innerörtlichen Straßen und/oder im Zusammenhang mit geringen Geschwindigkeiten des PKWs 99 entspricht, aktiviert werden. Beispielsweise könnte die Abmessung 311-2 (gestrichelte Linie in FIG. 6) im Zusammenhang mit einem Betriebsmodus 82, der einer Fahrt auf der Autobahn und/oder im Zusammenhang mit großen Geschwindigkeiten des PKWs 99 entspricht, aktiviert werden.

Dem liegt die Erkenntnis zugrunde, dass bei der Fahrt mit großen Geschwindigkeiten bzw. auf der Autobahn typischerweise Objekte in einer größeren Entfernung zur Vorrichtung 100 detektiert werden müssen. Deshalb kann es erstrebenswert sein, die Abmessung 311-2 des Scanbereichs entlang der vertikalen Scanachse 301 vergleichsweise klein zu dimensionieren, um im Fernbereich eine große Auflösung - beispielsweise eine große Scanpunktdichte - zu erhalten und/oder das unnötige Akquirieren von LIDAR-Daten im Nahbereich zu vermeiden. In einem weiteren Beispiel könnte durch einen kleineren Scanbereich der Zugriff auf ein Spektrum des Laserlichts reduziert werden. Dadurch können Interferenzen (engl. crosstalk) mit anderen Fahrzeugen, die auch LIDAR-Techniken im selben Spektrum durchführen, reduziert werden. Deshalb kann z.B. auch bei einem innerstädtischen Fahrtzustand eine Verringerung der Abmessung des Scanbereichs erstrebenswert sein. Der Zugriff auf das Spektrum kann aber im Allgemeinen nicht nur durch die Abmessung des Scanbereichs (z.B. bei fester Scanpunktdichte) reduziert werden, sondern alternativ oder zusätzlich auch durch eine Reduktion der Bildwiederholrate, der Scanpunktdichte, der Pulsenergie, etc..

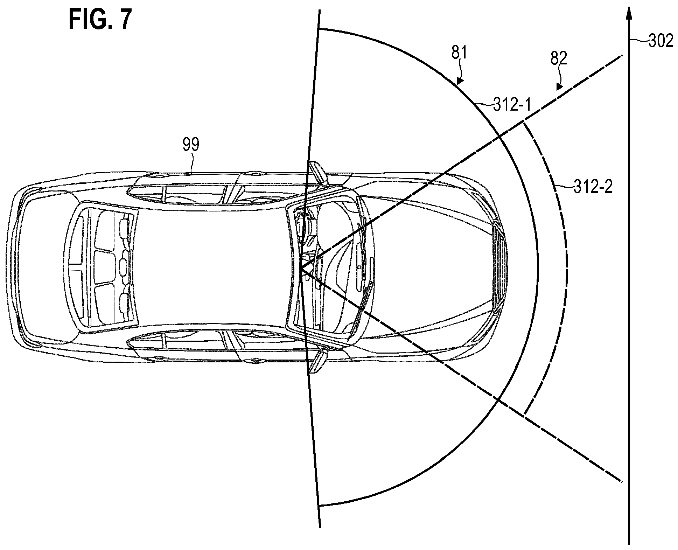

FIG. 7 illustriert Aspekte in Bezug auf eine Integration der Vorrichtung 100 in den PKW 99. FIG. 7 ist eine Aufsicht auf den PKW 99. Das Szenario der FIG. 7 entspricht dem Szenario der FIG. 6.

FIG. 7 illustriert weiterhin Aspekte in Bezug auf eine horizontale Scanachse 302 des Laserscanners 100. Beim bestimmungsgemäßen Einbau der Vorrichtung 100 in den PKW 99 ist die Scanachse 302 horizontalen Koordinatensystem des PKWs 99 orientiert, d.h. in etwa parallel zur Straße.

In dem Beispiel der FIG. 7 ist die Abmessung 312-1 des Scanbereichs entlang der horizontalen Scanachse 302 dargestellt. Außerdem ist die Abmessung 312-2 des Scanbereichs der horizontalen Scanachse 302 dargestellt. Aus dem Beispiel der FIG. 7 ist ersichtlich, dass die Abmessung 312-1 größer ist, als die Abmessung 312-2.

Beispielsweise wäre es möglich, dass die Abmessungen 312-1, 312-2 mit unterschiedlichen Betriebsmodi 81, 82 des Laserscanners 101 assoziiert sind. Beispielsweise könnte die Abmessung 312-1 im Zusammenhang mit einer Fahrt auf innere örtlichen Straßen und/oder im Zusammenhang mit einem Betriebsmodus 81, der Geschwindigkeiten des PKWs 99 unterhalb eines Schwellenwerts entspricht, aktiviert werden. Beispielsweise könnte die Abmessung 312-2 im Zusammenhang mit einem Betriebsmodus 82, der einer Fahrt auf der Autobahn und/oder großen Geschwindigkeiten des PKWs 99 entspricht, aktiviert werden.

Dem liegt die Erkenntnis zugrunde, dass bei der Fahrt mit großen Geschwindigkeiten bzw. auf der Autobahn oftmals Objekte vor dem PKW 99 detektiert werden müssen, jedoch Objekte links und rechts des PKWs 99 nicht detektiert werden müssen. Deshalb kann es erstrebenswert sein, die Abmessung 312-2 des Scanbereichs entlang der horizontalen Scanachse 302 vergleichsweise klein zu dimensionieren, um im Fernbereich eine große Auflösung - beispielsweise eine große Scanpunktdichte - zu erhalten und/oder das unnötige Akquirieren von LIDAR-Daten im Nahbereich links und rechts vom PKW 99 zu vermeiden. Beispielsweise kann dadurch eine Bildwiederholrate erhöht werden.

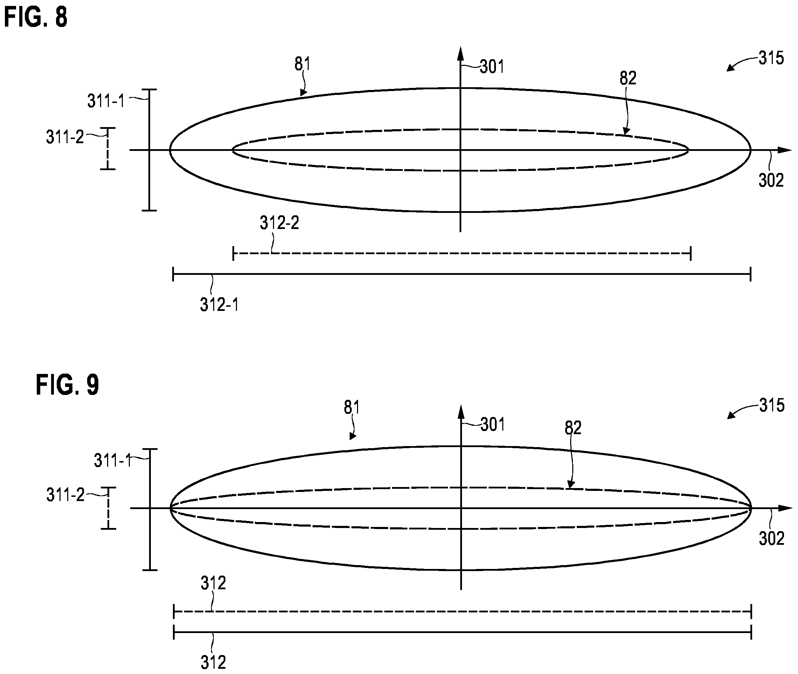

FIG. 8 illustriert Aspekte in Bezug auf den Scanbereich 315. FIG. 8 ist ein Polarplot entlang der vertikalen Scanachse 301 und der horizontalen Scanachse 302. Das Szenario der FIG. 8 entspricht grundsätzlich den Szenarien der FIGs. 6 und 7. Aus FIG. 8 ist ersichtlich, dass je nach Betriebsmodus 81, 82 des Laserscanners 101 sowohl die Abmessung 311-1, 311-2 entlang der vertikalen Scanachse 301 verändert werden kann, als auch die Abmessung 312-1, 312-2 entlang der horizontalen Scanachse 302.

FIG. 9 illustriert Aspekte in Bezug auf den Scanbereich 315. FIG. 9 ist ein Polarplot entlang der vertikalen Scanachse 301 und der horizontalen Scanachse 302. Das Szenario der FIG. 9 entspricht grundsätzlich den Szenarien der FIGs. 6-8. In dem Beispiel der FIG. 9 wird je nach Betriebsmodus 81, 82 des Laserscanners 101 jedoch lediglich die Abmessung 311-1, 311-2 des Scanbereichs 315 entlang der vertikalen Scanachse 301 angepasst; die Abmessung 312 des Scanbereichs 315 entlang der horizontalen Scanachse 302 wird nicht angepasst.

Es sind unterschiedliche Kombinationen in Bezug auf das Anpassen des Scanbereichs 315 in Abhängigkeit des Betriebsmodus 81, 82 denkbar. Beispielsweise könnte die Abmessung des Scanbereichs 315 entlang der vertikalen Scanachse 301 angepasst werden und die Abmessung des Scanbereichs 315 entlang der horizontalen Scanachse 302 nicht angepasst werden. Es wäre auch möglich, dass die Abmessung des Scanbereichs 315 entlang der vertikalen Scanachse 301 konstant bleibt, jedoch die Abmessung des Scanbereichs 315 entlang der horizontalen Scanachse 302 angepasst wird.

In verschiedenen Beispielen wurde voranstehend beschrieben, wie die Abmessungen des Scanbereichs 315 angepasst werden können. Es wäre aber auch möglich, dass unterschiedliche Betriebsmodi 81, 82 des Laserscanners 101 alternativ oder zusätzlich auch mit anderen Eigenschaften des Scanbereichs 315 assoziiert sind. Beispielsweise wäre es möglich, dass unterschiedliche Betriebsmodi 81, 82 des Laserscanners 101 mit einer Scanfolge verschiedener Scanpunkte innerhalb des Scanbereichs 315 assoziiert sind (Scantrajektorie). Alternativ oder zusätzlich wäre es möglich, dass unterschiedliche Betriebsmodi 81, 82 des Laserscanners 101 mit unterschiedlichen Ausrichtung des Scanbereichs 315 entlang einer oder mehrerer Scanachse 301, 302 assoziiert sind.

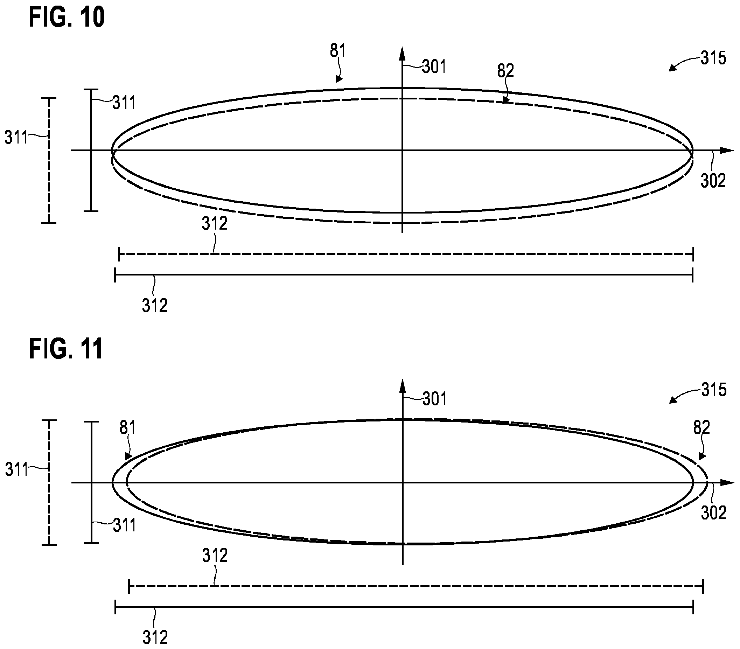

FIG. 10 illustriert Aspekte in Bezug auf den Scanbereich 315. FIG. 10 ist ein Polarplot entlang der vertikalen Scanachse 301 und der horizontalen Scanachse 302. In dem Beispiel der FIG. 10 wird je nach Betriebsmodus 81, 82 des Laserscanners 101 die Ausrichtung des Scanbereichs 315 im durch die Scanachse 301, 302 definierten Koordinatensystem verändert. Aus FIG. 10 ist ersichtlich, dass die Abmessungen 311, 312 des Scanbereichs 315 konstant bleiben.

In dem Beispiel der FIG. 10 wird ein Zentrum des Scanbereichs 315 je nach Betriebsmodus des Laserscanners 101 verschoben. Dies kann z.B. einem nicht-dynamischen Offset der Umlenkeinheit 112 entsprechen. Insbesondere wird in dem Beispiel der FIG. 10 das Zentrum des Scanbereichs 315 entlang der vertikalen Scanachse 302 verschoben. Beispielsweise könnte eine solche Verschiebung des Scanbereichs 315 dazu verwendet werden, um einen Gierwinkel, Rollwinkel und/oder Nickwinkel des PKWs 99 zu kompensieren.

Das Verschieben des Zentrums des Scanbereichs kann z.B. durch eine DC-Komponente eines Magnetfelds des Aktuators erreicht werden (vgl. Inset der FIG. 10). Das Verschieben des Zentrums des Scanbereichs könnte auch durch eine DC-Komponente der Auslenkung von Biegepiezoaktuatoren erreicht werden. Im Allgemeinen kann also eine solche DC-Komponente des Treibersignals der Anregung mit einer AC-Komponente 862 des Treibersignals überlagert sein, die z.B. die resonante Bewegung zum Scannen der Scanachsen 301, 302 bewirkt.

Beispielsweise könnte durch Kombination des Beispiels der FIG. 9 mit dem Beispiel der FIG. 10 eine Zoom-Funktionalität implementiert werden: Indem sowohl die Abmessung, als auch die Ausrichtung eines Scanbereichs variiert wird, kann der Scanbereich auf einen bestimmten Bereich fokussiert werden.

FIG. 11 illustriert Aspekte in Bezug auf den Scanbereich 315. FIG. 11 ist ein Polarplot entlang der vertikalen Scanachse 301 und der horizontalen Scanachse 302. In dem Beispiel der FIG. 11 wird je nach Betriebsmodus 81, 82 des Laserscanners 101 die Ausrichtung des Scanbereichs 315 im durch die Scanachse 301, 302 definierten Koordinatensystem verändert. Aus FIG. 11 ist ersichtlich, dass die Abmessungen 311, 312 des Scanbereichs 315 konstant bleiben.

Im dem Beispiel der FIG. 11 wird ein Zentrum des Scanbereichs 315 je nach Betriebsmodus 81, 82 des Laserscanners 101 verschoben. Insbesondere wird in dem Beispiel der FIG. 11 das Zentrum des Scanbereichs 315 entlang der horizontalen Scanachse 302 verschoben. Beispielsweise könnte eine solche Verschiebung des Scanbereichs 315 dazu verwendet werden, um einen Gierwinkel, Rollwinkel und/oder Nickwinkel des PKWs 99 zu kompensieren.

In verschiedenen Beispielen wäre es möglich, die die Implementierungen gemäß der voranstehend diskutierten FIGs. 6-11 miteinander zu kombinieren.

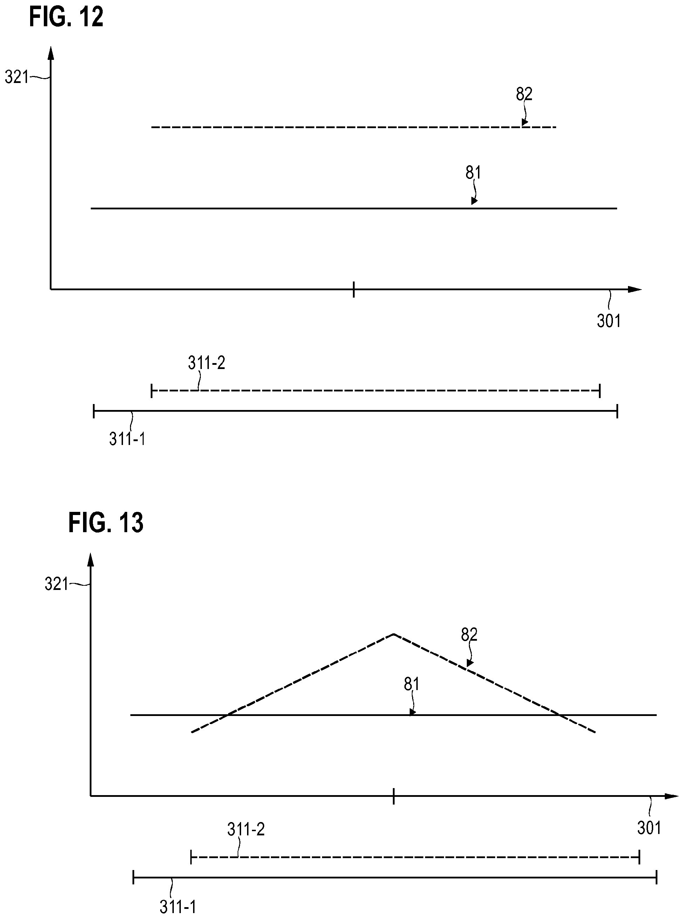

FIG. 12 illustriert Aspekte in Bezug auf eine Scanpunktdichte 321. FIG. 12 illustriert die Scanpunktdichte 321 entlang der vertikalen Scanachse 301 für verschiedene Betriebsmodi 81, 82. In dem Beispiel der FIG. 12 ist ersichtlich, dass unterschiedliche Betriebsmodi 81, 82 unterschiedliche Scanpunktdichte entlang der vertikalen Scanachse 301 implementieren können.

Durch die Implementierung unterschiedlicher Scanpunktdichten 321 kann erreicht werden, dass zum Beispiel für Abstandsmessungen von Objekten in großer Entfernung eine genügend große Anzahl von Scanpunkten pro Objekt erzielt werden kann.

In dem Beispiel der FIG. 12 sind die Scanpunktdichte 321 entlang der vertikalen Scanachse 301 konstant. Es wäre jedoch auch möglich, dass die Scanpunktdichte 321 entlang der vertikalen Scanachse 301 variiert. Beispielsweise wäre es möglich, dass die Variation der Scanpunktdichte 321 entlang der vertikalen Scanachse 301 für unterschiedliche Betriebsmodi unterschiedlich implementiert wird.

FIG. 13 illustriert Aspekte in Bezug auf eine Scanpunktdichte 321. FIG. 13 illustriert die Scanpunktdichte 321 entlang der vertikalen Scanachse 301 für verschiedene Betriebsmodi 81, 82. In dem Beispiel der FIG. 13 ist ersichtlich, dass unterschiedliche Betriebsmodi 81, 82 unterschiedliche Scanpunktdichten 321 entlang der vertikalen Scanachse 301 implementieren können. In dem Beispiel der FIG. 13 weist die Scanpunktdichte 321 des Betriebsmodus 82 (gestrichelte Linie) eine charakteristische Variation entlang der vertikalen Scanachse 301 auf, d. h. es werden im Allgemeinen unterschiedliche Variationen der Scanpunktdichte 321 für unterschiedliche Betriebsmodi 81, 82 implementiert.

Beispielsweise kann ein Szenario gemäß dem Beispiel der FIG. 13 insbesondere im Zusammenhang mit der Differenzierung zwischen einer Fahrtsituation auf einer Autobahn bzw. bei hohen Geschwindigkeiten des PKWs 99 gegenüber einer Farbsituation auf einer innerstädtischen Straße bzw. bei niedrigen Geschwindigkeiten des PKWs 99 erstrebenswert sein. Zum Beispiel kann bei hohen Geschwindigkeiten eine hohe Scanpunktdichte 321 insbesondere in einem Zentralbereich des Scanbereichs 315 erstrebenswert sein; typischerweise entspricht der Zentralbereich großen Entfernungen der entsprechenden Objekte. Wenn jedoch die Objekte vergleichsweise nahe beim PKW 99 erwartet werden, kann eine homogene Scanpunktdichte 321 erstrebenswert sein: dies ist typischerweise im Zusammenhang mit niedrigen Geschwindigkeiten des PKWs 99 der Fall.

Während in Bezug auf die FIGs. 12 und 13 voranstehend Beispiele der Scanpunktdichte 321 entlang der vertikalen Scanachse 301 diskutiert wurden, kann es alternativ oder zusätzlich möglich sein, die Scanpunktdichte entlang weiterer Scanachse, beispielsweise der horizontalen Scanachse 302, für unterschiedliche Betriebsmodi 81, 82 unterschiedlich zu implementieren.

Unterschiedliche Scanpunktdichten können beispielsweise unterschiedlichen Abständen benachbarter Scanzeilen entsprechen. Die Scanpunktdichte kann beispielsweise einen Abstand benachbarter Abstrahlwinkel für gepulstes Laserlicht 191 beschreiben. Die Scanpunktdichte kann z.B. eine Winkelauflösung des Scannens beschreiben.

Unterschiedliche Scanpunktdichte können zum Beispiel durch unterschiedliche Schrittweiten einer gestuften Bewegung entlang eines Freiheitsgrads der Bewegung, der mit der entsprechenden Scanachse 301, 302 assoziiert ist, erreicht werden.

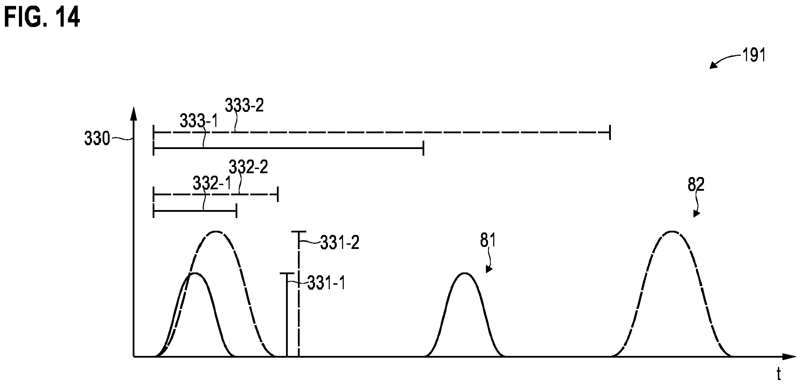

FIG. 14 illustriert Aspekte in Bezug auf das primäre Laserlicht 191, das von der Laserlichtquelle 111 des Laserscanners 101 ausgesendet wird. FIG. 14 illustriert die Amplitude 330 des Laserlichts 191 als Funktion der Zeit.

In FIG. 14 ist eine Pulsfolge des Laserlichts 191 für einen Betriebsmodus 81 (durchgezogene Linie) und einen Betriebsmodus 82 (gestrichelte Linie) dargestellt. Aus FIG. 14 ist ersichtlich, dass die beiden Betriebsmodi 81, 82 unterschiedliche Pulsenergien der Pulse des Laserlichts 191 implementieren (die Pulsenergie ist proportional zur Fläche unter den Kurven in FIG. 14). Dies wird erreicht durch unterschiedliche Spitzenamplituden 331-1, 331-2, sowie durch unterschiedliche Pulsdauern 332-1, 332-2. In anderen Beispielen wäre es auch möglich, dass entweder die Spitzenamplitude oder die Pulsdauer in Abhängigkeit des Betriebsmodus 81, 82 verändert wird.

In dem Beispiel der FIG. 14 sind die beiden Betriebsmodi 81, 82 zusätzlich mit unterschiedlichen Wiederholungsraten 333-1, 333-2 der Pulse des Laserlichts 191 assoziiert. Das ist optional. Beispielsweise wäre es möglich, dass ein Tastgrad der Pulsfolge in Abhängigkeit des Betriebsmodus 81, 82 verändert wird.

Durch eine Anpassung der Pulsfolge des Laserlichts 191, kann erreicht werden, dass zum Beispiel bei Bedarf besonders große Reichweiten für die Abstandsmessung erzielt werden können. Große Reichweiten für die Abstandsmessung können beispielsweise durch eine hohe Pulsenergie erzielt werden. Oftmals kann eine höhere Pulsenergie einhergehen mit einer geringeren Tiefenauflösung, d. h. einer geringeren Genauigkeit mit welcher der Abstand der Objekte bestimmt werden kann. Jedoch kann es bei Abstandsmessungen von vergleichsweise weit entfernten Objekten - beispielsweise in einem Abstand im Bereich von 100-400 m - entbehrlich sein, eine besonders hohe Genauigkeit bei der Bestimmung des Abstands zu erzielen.

Gleichzeitig kann erreicht werden, dass bestimmte Grenzwerte für die Augensicherheit (engl. eye safety), die beispielsweise Situationsabhängig definiert sind (z.B. striktere Grenzwerte innerorts im Vergleich zu Grenzwerten auf der Autobahn), jeweils gut ausgeschöpft werden können.

Ferner kann erreicht werden, dass der Zugriff auf das Spektrum des Laserlichts minimiert wird. Dadurch können Interferenzen mit Laserscanner und anderer Fahrzeuge reduziert werden. Dies kann insbesondere im Zusammenhang mit dem innerstädtischen Verkehr erstrebenswert sein, wo eine große Dichte von Fahrzeugen vorliegen kann; z.B. im Vergleich zu einer Situation auf Autobahnen, wo sich die Fahrzeuge geordneter und nach Fahrtrichtung getrennt fortbewegen.

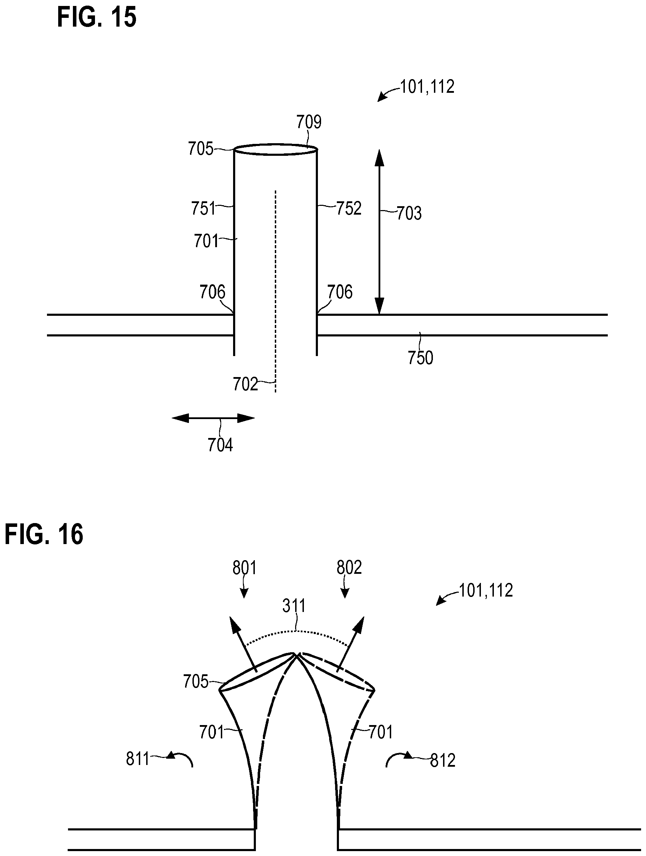

FIG. 15 illustriert Aspekte in Bezug auf die Vorrichtung 100. Insbesondere illustriert FIG. 15 Aspekte in Bezug auf den Laserscanner 101. In dem Beispiel der FIG. 15 umfasst der Laserscanner 101 eine Faser 701. Die Faser 701 implementiert die Umlenkeinheit 112. Dies bedeutet, dass die Faser 701 eingerichtet sein kann, um das Laserlicht 191 abzulenken.

Die Faser 701 erstreckt sich entlang einer Zentralachse 702. Die Faser 701 umfasst ein bewegliches Ende 705 mit einer Endfläche 709.

Außerdem ist eine Fixierung 750 der Vorrichtung 100 dargestellt. Beispielsweise könnte die Fixierung 750 aus Kunststoff oder Metall gefertigt sein. Die Fixierung 750 könnte zum Beispiel Teil eines Gehäuses sein, welches das bewegliche Ende 705 der Faser 701 aufnimmt.

Die Fixierung 750 fixiert die Faser 701 an einer Fixierstelle 706. Zum Beispiel könnte die Fixierung 750 die Faser 701 an der Fixierstelle 706 durch eine Klemmverbindung und/oder eine Lötverbindung und/oder eine Klebeverbindung fixieren. Im Bereich der Fixierstelle 706 ist die Faser 701 deshalb ortsfest bzw. starr mit der Fixierung 750 gekoppelt.

In FIG. 15 ist weiterhin die Länge 703 der Faser 701 zwischen der Fixierstelle 706 und dem beweglichen Ende 705 dargestellt. Aus FIG. 15 ist ersichtlich, dass das bewegliche Ende 705 gegenüber der Fixierstelle 706 beabstandet ist. Zum Beispiel könnte die Länge 703 im Bereich von 0,5 cm bis 10 cm liegen, optional im Bereich von 5 cm bis 8 cm.

Das bewegliche Ende 705 steht also frei im Raum. Durch diesen Abstand des beweglichen Endes 705 gegenüber der Fixierstelle 706 kann erreicht werden, dass die Position des beweglichen Endes 705 der Faser 701 gegenüber der Fixierstelle 706 verändert werden kann. Dabei ist es beispielsweise möglich, die Faser 701 im Bereich zwischen der Fixierstelle 706 und dem beweglichen Ende 705 zu krümmen und/oder zu verdrehen. In FIG. 15 ist aber ein Ruhezustand der Faser 701 ohne Bewegung bzw. Auslenkung dargestellt.

FIG. 16 illustriert Aspekte in Bezug auf die Vorrichtung 100. Insbesondere illustriert FIG. 16 Aspekte in Bezug auf den Laserscanner 101. In dem Beispiel der FIG. 16 umfasst die Umlenkeinheit 112 eine Faser 701. Das Beispiel der FIG. 16 entspricht dem Beispiel der FIG. 15. FIG. 16 zeigt einen dynamischen Zustand der Umlenkeinheit.

In dem Beispiel der FIG. 16 ist das Ende 705 der Faser 701 in einer Position 801 und einer Position 802 (gestrichelte Linie in FIG. 16) dargestellt. Diese Positionen 801, 802 implementieren Extrempositionen der Faser 701: zum Beispiel könnte ein Anschlag vorgesehen sein, welcher eine weitere Bewegung des Endes 705 über die Positionen 801, 802 hinaus verhindert (in FIG. 16 nicht dargestellt). Die Faser 701 kann sich zwischen den Positionen 801, 802 hin- und her bewegen, zum Beispiel periodisch. In dem Beispiel der FIG. 16 entspricht die Position 801 einer Krümmung 811. Die Position 802 entspricht einer Krümmung 812. Die Krümmungen 811, 812 weisen entgegengesetzte Vorzeichen auf. Zum Bewegen der Faser 701 zwischen den Positionen 801, 802, kann der Aktuator 114 vorgesehen sein (in FIG. 16 nicht dargestellt). Die Bewegung der Faser 701 zwischen den Positionen 801, 802 entspricht einer in der Zeichenebene der FIG. 16 definierten Transversalmode der Faser 701.

Es wäre alternativ oder zusätzlich möglich, eine senkrecht zur Zeichenebene der FIG. 16 definierten Transversalmode der Faser 701 zum Scannen des Laserlichts 191 zu verwenden. Zum Beispiel wäre anstatt einer eindimensionalen Bewegung (wie in FIG. 16 dargestellt), auch eine örtlich und zeitlich überlagerte zweidimensionale Bewegung mit einer Komponente senkrecht zur Zeichenebene der FIG. 16 möglich. Derart kann zum Beispiel eine Überlagerungsfigur implementiert werden, indem die orthogonalen Freiheitsgrade der Bewegung entsprechend senkrecht zueinander orientierter Transversalmoden angeregt werden.
Durch das Bereitstellen der Krümmungen 811, 812 in den Positionen 801, 802 wird erreicht, dass das Laserlicht 191 über einen bestimmten Scanbereich 315 mit einer Abmessung 311 abgestrahlt wird. In dem Beispiel der FIG. 16 implementiert die dargestellte Transversalmode die vertikale Scanachse 301. Es wäre aber auch möglich, dass die dargestellte Transversalmode die horizontale Scanachse 302 implementiert.

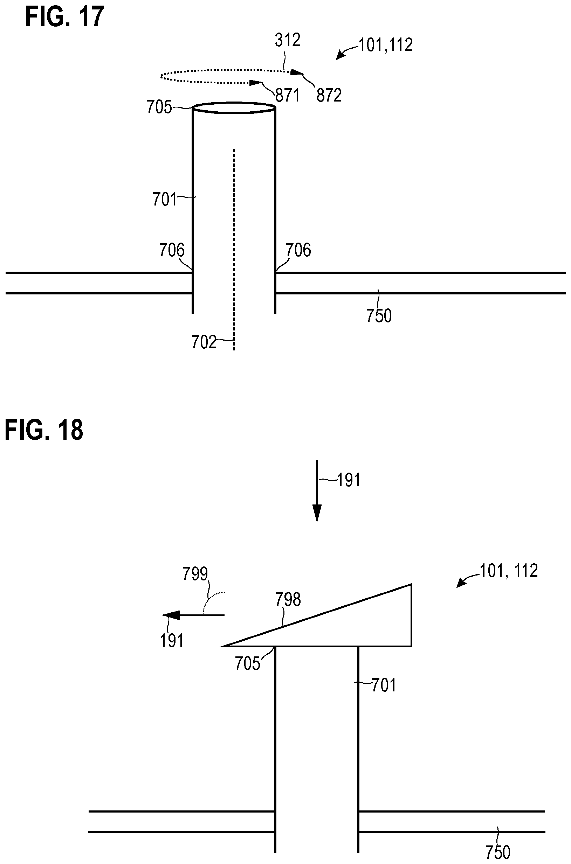

FIG. 17 illustriert Aspekte in Bezug auf die Vorrichtung 100. Insbesondere illustriert FIG. 17 Aspekte in Bezug auf den Laserscanner 101. In dem Beispiel der FIG. 17 umfasst die Umlenkeinheit 112 wiederum die Faser 701. Das Beispiel der FIG. 17 entspricht grundsätzlich den Beispielen der FIGs. 15 und 16. FIG. 17 zeigt einen dynamischen Zustand der Umlenkeinheit 112.
In dem Beispiel der FIG. 17 wird das bewegliche Ende 705 der Faser 701 derart bewegt, dass sich die Faser 701 im Bereich zwischen der Fixierstelle 706 und dem beweglichen Ende 705 zwischen einer ersten Torsion 871 und einer zweiten Torsion 872 bewegt. Dies entspricht einer Verdrillung der Faser 701 entlang der Zentralachse 702. Die Faser 701 wird also gemäß einer Torsionsmode angeregt.
Durch das Bereitstellen der Torsionen 871, 872 wird erreicht, dass das Laserlicht 191 (in FIG. 17 nicht dargestellt) über einen entsprechenden Scanbereich mit einer Abmessung 312 abgestrahlt werden kann.
In dem Beispiel der FIG. 17 implementiert die dargestellte Torsionsmode die horizontale Scanachse 302. Es wäre aber auch möglich, dass die dargestellte Torsionsmode die vertikale Scanachse 301 implementiert.
FIG. 18 illustriert Aspekte in Bezug auf die Vorrichtung 100. Insbesondere illustriert FIG. 18 Aspekte in Bezug auf die Umlenkeinheit 112. In der Ausführungsform der FIG. 18 umfasst die Umlenkeinheit 112 die Faser 701, die beispielsweise gemäß einer oder mehrerer Transversalmoden und/oder gemäß einer oder mehrerer Torsionsmoden bewegt werden kann. In der Ausführungsform der FIG. 18 umfasst die Umlenkeinheit 112 weiterhin einen Spiegel 798, der auf dem beweglichen Ende 705 der Faser 701 starr angebracht ist. Die Spiegelfläche 798A des Spiegels 798 wird in dem Beispiel der FIG. 18 von vorne mit dem Laserlicht 191 beleuchtet, wobei das Laserlicht 191 nicht durch einen Lichtwellenleiter der Faser 701 läuft. Dadurch wird ein Ablenkwinkel 799 des Laserlichts 191 bewirkt. Der Ablenkwinkel 799 hängt dabei ab von der Krümmung 811, 812 und/oder der Torsion 871, 872 der Faser 701. Beispielsweise könnte anstatt eines Spiegels 798 auch ein Prisma verwendet werden, um den Ablenkwinkel 799 zu implementieren. Aus FIG. 18 ist ersichtlich, dass sich die Faser 701 von der Rückseite 798B des Spiegels 798 wegerstreckt. Eine solche Rückseitenaufhängung kann - z.B. im Vergleich zu einer in-plane Aufhängung - größere Scanbereiche ermöglichen.

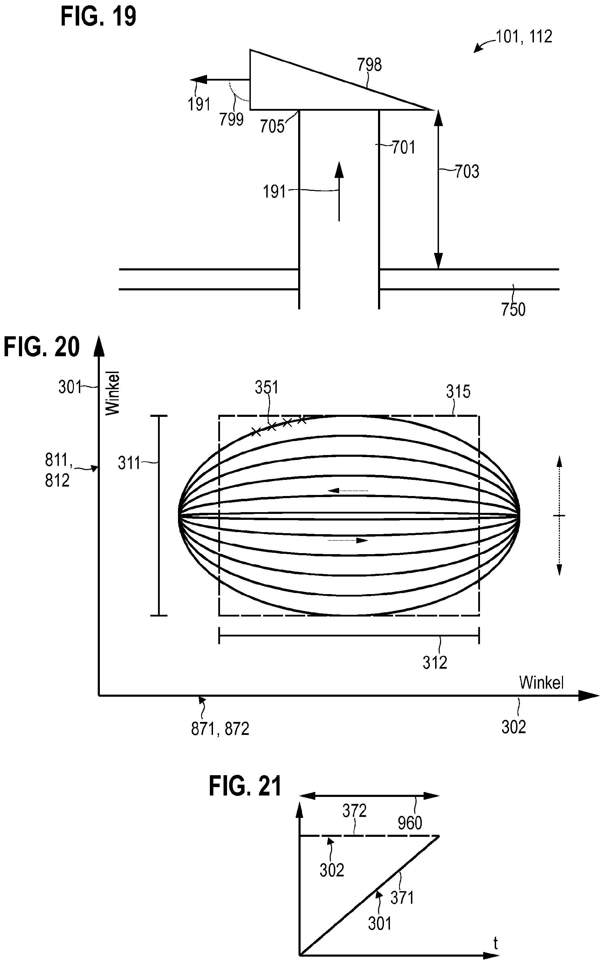

FIG. 19 illustriert Aspekte in Bezug auf die Vorrichtung 100. Insbesondere illustriert FIG. 19 Aspekte in Bezug auf die Umlenkeinheit 112. In dem Beispiel der FIG. 19 umfasst die Umlenkeinheit 112 die Faser 701, die beispielsweise gemäß einer oder mehrerer Transversalmoden und/oder gemäß einer oder mehreren Torsionsmoden bewegt werden kann. In dem Beispiel der FIG. 19 umfasst die Umlenkeinheit 112 weiterhin einen Spiegel 798, der auf dem beweglichen Ende 705 der Faser 701 starr angebracht ist. Alternativ oder zusätzlich könnte auch eine Linse als optisches Element vorhanden sein, beispielsweise eine GRIN-Linse. Der Spiegel 798 wird in dem Beispiel der FIG. 19 mit Laserlicht 191 beleuchtet, wobei das Laserlicht 191 durch einen Lichtwellenleiter der Faser 701 läuft. Dadurch wird der Ablenkwinkel 799 des Laserlichts 191 bewirkt. Der Ablenkwinkel 799 hängt dabei wiederum von der Krümmung 811, 812 und/oder der Torsion 871, 872 der Faser 701 ab. Beispielsweise könnte anstatt eines Spiegels 798 auch ein Prisma verwendet werden, um den Ablenkwinkel 799 zu implementieren.

FIG. 20 illustriert Aspekte in Bezug auf das Scannen des Umfelds der Vorrichtung 100 durch Bewegen der Faser 701. Insbesondere illustriert FIG. 20 eine Überlagerungsfigur, die erhalten wird, wenn eine erste Bewegung der Faser entlang der Scanachse 301 mit einer während einer Zeitdauer variablen Amplitude mit einer zweiten Bewegung der Faser 702 (horizontale Achse in FIG. 20) überlagert wird. Das Überlagern der Bewegungen bedeutet, dass die Bewegungen zumindest teilweise zeitparallel und im Ortsraum überlagert während der Zeitdauer ausgeführt werden bzw. durch den Aktuator 114 angeregt werden.

In dem Beispiel der FIG. 20 wird die Torsion 871, 872 der Faser 701 - welche die Abmessung 312 des Scanbereichs 315 definiert - überlagert mit der Krümmung 811, 812 der Faser 701. Dies bedeutet, dass einer der beiden überlagerten Freiheitsgrade der Bewegung einer Transversalmode der Faser 701 - beispielsweise erster oder zweiter Ordnung - entspricht; sowie der andere der beiden überlagerten Freiheitsgrade der Bewegung einer Torsionsmode der Faser 701 - beispielsweise erster Ordnung - entspricht. Die horizontalen Pfeile in FIG. 20 illustrieren die Richtung des Abscannen der Überlagerungsfigur. Durch die Überlagerung der resonant bewirkten Transversalmoden mit der Torsionsmode lässt sich ein besonders großer Scanbereich 315 implementieren.

Dabei wird die Amplitude der Krümmung 811, 812 über der Zeitdauer, die durch die Überlagerungsfigur ausgebildet wird, graduell erhöht. Dadurch weitet sich das "Auge" der Überlagerungsfigur hin zu größeren Ablenkwinkel (in FIG. 20 durch die vertikalen gestrichelten Pfeile illustriert). Die maximale Amplitude der Krümmung 811, 812 entspricht dabei der Abmessung 311 des Scanbereichs 315.

Gleichzeitig wird in dem Beispiel der FIG. 20 die Amplitude der Torsion 871, 872 der Faser 701 (horizontale Achse in FIG. 20) nicht verändert und ist deshalb konstant. Deshalb weist die Überlagerungsfigur eine feste links-rechts Ausdehnung in FIG. 20 auf, die der Abmessung 312 des Scanbereichs 315 entspricht.

In anderen Beispielen wäre es möglich, sowohl die Amplitude der Torsion 871, 872, als auch die Amplitude der Krümmung 811, 812 der Faser 701 zu verändern. In noch weiteren Beispielen wäre es möglich, lediglich die Amplitude der Torsion 871, 872 der Faser 701 zu verändern. Es wäre aber grundsätzlich auch möglich, die Überlagerungsfiguren durch orthogonale Transversalmoden der Faser 701 zu implementieren und z.B. die Amplitude lediglich einer der Transversalmoden zu verändern.

Die verschiedenen Zweige der Überlagerungsfigur entsprechend Bildzeilen eines LIDAR-Bilds, das durch den Scanbereich 315 definiert wird. Durch wiederholtes Auslesen des Detektors können entlang der Zweige der Überlagerungsfigur Scanpunkte 351 bzw. Bildpunkte erhalten werden. Für aufeinanderfolgende LIDAR-Bilder wird die Überlagerungsfigur mit einer bestimmten Wiederholrate wiederholt umgesetzt. Die Zeitdauer, die benötigt wird, um die Überlagerungsfigur umzusetzen, entspricht deshalb einer Bildwiederholrate.

FIG. 21 illustriert Aspekte in Bezug auf die Scanamplituden 371, 372 der Bewegungen 811, 812, 871, 872 der Faser 701 gemäß dem Beispiel der FIG. 20. Insbesondere illustriert FIG. 21 einen Zeitverlauf der Scanamplituden 371, 372.

In FIG. 21 ist die Zeitdauer 960 dargestellt, die zum Abtasten der Überlagerungsfigur gemäß dem Beispiel der FIG. 20 benötigt wird. Die Zeitdauer 960 kann beispielsweise einer Wiederholrate des Scanvorgangs, der mit dem Scanbereich 315 assoziiert ist, entsprechen. Z.B. könnte - um die Bildwiederholrate zu reduzieren (z.B. um den Zugriff auf das Spektrum des Laserlichts zur Vermeidung von Interferenzen zu reduzieren) - lediglich für jedes zweite oder dritte Abtasten der Überlagerungsfigur Laserpulse ausgesendet werden.

Aus FIG. 21 ist ersichtlich, dass die Scanamplitude 371 der Bewegung, die dem Scannen entlang der Scanachse 301 entspricht, während der Zeitdauer 960 monoton und konstant vergrößert wird. Die Amplitude 371 könnte auch stufenweise vergrößert werden. Die Amplitude 371 könnte auch monoton verringert werden.

Dahingegen bleibt die Scanamplitude 372 der Bewegung, die dem Scannen entlang der Scanachse 302 entspricht, während der Zeitdauer 960 konstant. Zum Beispiel könnte durch eine Veränderung der Änderungsrate der Scanamplitude 371 eine unterschiedliche Scanpunktdichte der Scanpunkte 351 erzielt werden. Zum Beispiel könnte ein weniger schneller Anstieg der Scanamplitude 371 erreichen, dass die Scanzeilen der Überlagerungsfigur (cf. FIG. 20) näher beieinanderliegen und somit eine größere Scanpunktdichte erreicht wird.

Dabei ist es beispielsweise möglich, dass die Änderungsrate der Scanamplitude 371 eine Abhängigkeit vom Betriebsmodus 81, 82 aufweist. D.h. es könnte für unterschiedliche Betriebsmodi 81, 82 ein flacherer oder steilerer Anstieg oder Abfall der Scanamplitude 371 umgesetzt werden. Dann könnte z.B. für kleinere Bildbereiche 315 eine höhere Scanpunktdichte durch eine geringere Änderungsrate der Amplitude 371 erzielt werden. Z.B. kann derart bei hohen Geschwindigkeiten eine hohe Auflösung auch für weit entfernte Objekte erzielt werden.

Während in dem Beispiel der FIG. 21 die Scanamplitude 371 entlang der Scanachse 301 variiert wird, wäre es in anderen Beispielen auch möglich, alternativ oder zusätzlich die Scanamplitude 372 entlang der Scanachse 302 zu verändern. Grundsätzlich ist es möglich, die Scanamplitude in Bezug auf Transversalmoden und/oder Torsionsmoden zu verändern bzw. fest zu lassen.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Z.B. wurden obenstehend verschiedene Beispiele in Bezug auf unterschiedliche Betriebsparameter beschrieben. Dabei können aber in weiteren Beispielen noch weitere Betriebsparameter oder andere Betriebsparameter berücksichtigt werden. Z.B. wäre es möglich, dass eine Wiederholungsraten 333-1, 333-2 der Pulse des Laserlichts 191spektral geformt ist - d.h. es werden die Laserpulse nicht bei einer einzigen festen Frequenz ausgesendet, sondern in einem bestimmten Frequenzband. Z.B. könnte eine zufällige oder quasizufällige Modulation der Wiederholungsrate erfolgen. Dadurch kann Interferenz mit anderen Fahrzeugen reduziert werden. Die Breite des Frequenzbands könnte dann in Abhängigkeit von dem Fahrtzustand angepasst werden. Z.B. könnte eine dreiecksförmige Wahrscheinlichkeitsdichtefunktion p in Bezug auf das Frequenzband definiert sein: dies bedeutet, dass für jeden Puls eine bestimmte Wiederholrate f0 am wahrscheinlichsten eintritt, und Wiederholfrequenzen f mit größeren Abständen zu der Wiederholrate f0 entsprechend unwahrscheinlicher eintreten. Im Allgemeinen kann p eine Funktion des Abstands zu f0 sein, also *ρ*(*f*) = *f*(|f₀ - *f*|). Dadurch wird erreicht, dass im Mittel eine bestimmte Wiederholrate und damit eine bestimmte Scanpunktdichte gewährleistet wird. Andererseits kann die Interferenz mit anderen Fahrzeugen reduziert werden.

Voranstehend wurden verschiedene Techniken in Bezug auf resonantes Betreiben eines Laserscanners beschrieben. Diese Beispiele können aber auch im Zusammenhang von nichtresonant betriebenen Laserscannern verwendet werden. Z.B. könnten kontinuierlich rotierende Mehrfacettenspiegel oder stufenweise betriebene Scanner verwendet werden. Z.B. könnten Galvanometerscanner verwendet werden. Beispielhafte Laserscanner sind z.B. beschrieben in US 2017 0 131 387 A1.

Ferner wurden voranstehend verschiedene Techniken in Bezug auf einen Laserscanner erläutert. In manchen Beispielen wäre es aber nicht notwendig, einen Laserscanner zu verwenden. Stattdessen könnte z.B. im Allgemeinen ein ortsaufgelöstes LIDAR-System verwendet werden. Z.B. könnten nämlich auch Flash -LIDAR Techniken eingesetzt werden. Ein FLASH-LIDAR System ist z.B. beschrieben in US 2012 0 038 903 A1. Anstatt Licht entlang einer einzelnen Richtung auszusenden, wird bei Flash-LIDAR Laserlich entlang einer 1-D Linie oder sogar in einen 2-D Bereich zeitgleich ausgesendet. Dazu kann zum Beispiel ein Aufweitungselement im Strahlengang angeordnet sein. Das aus unterschiedlichen Raumbereichen reflektierte Licht wird dann mittels einer geeigneten Optik auf unterschiedliche Bildpunkte eines Detektors abgebildet. Dazu muss Licht immer aus dem gesamten Raumbereich gesammelt werden. Eine Ortsraumfilterung durch verwendung derselben Detektorapertur und Emitterapertur - wie z.B. im Zusammenhang mit Scansystemen möglich - wird nicht verwendet. Bei Flash-LIDAR kann durch die Zuordnung von Raumbereichen zu unterschiedlichen Detektorbildpunkten kann die laterale Ortsauflösung erzielt werden. Auch ein solches Flash-LIDAR-System kann mit unterschiedlichen Betriebsmodi betrieben werden. Zum Beispiel kann - wie obenstehend im Zusammenhang mit einem Scanner beschrieben - die Wiederholrate, mit denen Laserlicht ausgesendet wird, angepasst werden (cf. FIG. 14). Dies kann zum Beispiel - wie obenstehend beschrieben - insbesondere dann erstrebenswert sein, wenn der Zugriff auf das Spektrum des Laserlichts zur Vermeidung von Interferenzen mit anderen Fahrzeugen reduziert werden soll. Im Zusammenhang mit Flash-LIDAR-Systemen kann nämlich die Interferenz mit anderen Fahrzeugen besonders groß sein: da das pro Schuss Licht nicht nur entlang einer wohl definierten 0-D Richtung ausgesendet wird, sondern vielmehr entlang einer 1-D Linie oder sogar in einen 2-D Bereich ausgesendet wird, und Licht aus einem entsprechenden Umfeldbereich aufgesammelt werden muss, kann die Anfälligkeit gegenüber Interferenz bei Flash-LIDAR-Systemen besonders groß sein. Weitere Parameter die von Betriebsmodus zu Betriebsmodus im Zusammenhang mit Flash-LIDAR-Systemen variiert werden können, umfassen: Bildwiederholrate; Scanpunktdichte (z.B. durch Reduktion der ausgelesenen Bildpunkte des Detektors, um Bildpunktübersprechen zu reduzieren); Abmessung und/oder Ausrichtung des Erfassungsbereichs (z.B. durch Variation der ausgelesenen Bildpunkte und/oder durch Verwendung von unterschiedlichen Aufweitungselementen im Strahlengang).

## Patentansprüche

1. Vorrichtung (100), die umfasst:
- einen Laserscanner (101) mit einer Laserlichtquelle (111), wobei der Laserscanner (101) eingerichtet ist, um Laserlicht aus der Laserlichtquelle (111) entlang einer ersten Scanachse (301, 302) zu scannen,
- eine Schnittstelle, die eingerichtet ist, um Steuerdaten (104, 200) zu empfangen, die indikativ für einen Fahrtzustand (202) eines Fahrzeugs (99) ist, und
- mindestens eine Recheneinheit (102), die eingerichtet ist, um den Laserscanner (101) anzusteuern, um in Abhängigkeit vom Fahrtzustand (202) des Fahrzeugs (99) einen aktiven Betriebsmodus (81, 82) aus einer Vielzahl von Betriebsmodi (81, 82) auszuwählen,
wobei die mindestens eine Recheneinheit (102) weiterhin eingerichtet ist, um basierend auf dem Laserlicht eine Abstandsmessung von Objekten im Umfeld der Vorrichtung (100) durchzuführen,
wobei der Laserscanner (101) eingerichtet ist, um das Laserlicht (191, 192) weiterhin entlang einer zweiten Scanachse (301, 302) zu scannen, die verschieden von der ersten Scanachse (301, 302) ist,
wobei der Laserscanner (101) weiterhin mindestens einen Aktuator (114) und eine erste Umlenkeinheit (112) und eine zweite Umlenkeinheit aufweist, die eingerichtet sind, um sequentiell vom Laserlicht durchlaufen zu werden,
wobei der Aktuator (114) der eingerichtet ist, um eine erste Bewegung der ersten Umlenkeinheit (112) gemäß der ersten Scanachse (301, 302) und eine zweite Bewegung der zweiten Umlenkeinheit (112) gemäß der zweiten Scanachse (301, 302) zu bewirken,
wobei die erste Bewegung und die zweite Bewegung zeitlich überlagert sind,
wobei die erste Umlenkeinheit (112) eine Faser (701) und ein mit einem beweglichen Ende (705) der Faser (701) verbundenes optisches Element (798) aufweist,
wobei das optische Element (798) ein Spiegel ist mit einer Spiegelfläche (798A) und einer Rückseite (798B), und
wobei sich die Faser (701) von der Rückseite (798B) wegerstreckt.

2. Vorrichtung (100) nach Anspruch 1,
wobei die Vielzahl von Betriebsmodi (81, 82) Scanbereiche (315) mit unterschiedlichen Abmessungen und/oder Ausrichtungen entlang der ersten Scanachse (301, 302) und optional einer zweiten Scanachse (301, 302) implementieren.

3. Vorrichtung (100) nach Anspruch 1 oder 2,
wobei die Vielzahl von Betriebsmodi (81, 82) Scanbereiche (315) mit unterschiedlichen Ausrichtungen entlang der ersten Scanachse (301, 302) und optional entlang einer zweiten Scanachse (301, 302) implementieren,
wobei die unterschiedlichen Ausrichtungen der Scanbereiche (351) durch unterschiedliche Anordnungen des Zentrums der Scanbereiche (351) definiert sind,
wobei der Laserscanner (101) weiterhin mindestens einen Aktuator (114) aufweist, der eingerichtet ist, um die Anordnungen des Zentrums der Scanbereiche (351) mit einer DC-Komponente eines Treibersignals zu bewirken.

4. Vorrichtung (100) nach Anspruch 2 oder 3,
wobei der Fahrzustand (202) des Fahrzeugs zumindest eines von einem Gierwinkel, einem Rollwinkel und/oder einem Nickwinkel umfasst,
wobei die Recheneinheit (102) eingerichtet ist, um mittels der Ausrichtung der Scanbereiche (315) den Gierwinkel, den Rollwinkel und/oder den Nickwinkel des Fahrzeugs (99) zu kompensieren.

5. Vorrichtung (100) nach einem der voranstehenden Ansprüche,
wobei die Vielzahl von Betriebsmodi (81, 82) unterschiedliche Pulsenergien von Pulsen des Laserlichts (191, 192) und/oder unterschiedliche Wiederholraten der Pulse des Laserlichts (191, 192) implementieren.

6. Vorrichtung (100) nach einem der voranstehenden Ansprüche,
wobei die Vielzahl von Betriebsmodi (81, 82) unterschiedliche Frequenzbänder für eine Wiederholrate von Pulsen des Laserlichts (191, 192) optional mit einer im Frequenzraum variierenden Wahrscheinlichkeitsdichtefunktion implementieren.

7. Vorrichtung (100) nach einem der voranstehenden Ansprüche,
wobei die Vielzahl von Betriebsmodi (81, 82) unterschiedliche Scanpunktdichten (321) entlang der ersten Scanachse (301, 302) implementieren.

8. Vorrichtung (100) nach Anspruch 7,
wobei für einen ersten Betriebsmodus (81, 82) der Vielzahl von Betriebsmodi (81, 82) die Scanpunktdichte (321) entlang der ersten Scanachse (301, 302) variiert,
wobei optional für einen zweiten Betriebsmodus (81, 82) der Vielzahl von Betriebsmodi (81, 82) die Scanpunktdichte (321) entlang der ersten Scanachse (301, 302) konstant ist.

9. Vorrichtung (100) nach einem der voranstehenden Ansprüche,
wobei der Laserscanner (101) weiterhin mindestens einen Aktuator (114) aufweist, der eingerichtet ist, um eine erste Bewegung einer Umlenkeinheit des Laserscanners gemäß der ersten Scanachse (301, 302) mit einer Änderung der Scanamplitude während eines Scanvorgangs, der einem Scanbereich entspricht, zu bewirken,
wobei die Vielzahl von Betriebsmodi (81, 82) unterschiedliche Änderungsraten der Scanamplitude der ersten Bewegung implementieren.

10. Vorrichtung (100) nach einem der voranstehenden Ansprüche,
wobei die erste Scanachse (301, 302) vertikal in Bezug auf das Fahrzeug ausgerichtet ist.

11. Vorrichtung (100) nach einem der voranstehenden Ansprüche,
wobei der Fahrtzustand (202) aus folgender Gruppe ausgewählt ist: ein Straßentyp, wie zum Beispiel Autobahn, innerstädtische Straße, Landstraße, Staatsstraße; die Geschwindigkeit des Fahrzeugs, beispielsweise in Kilometer pro Stunde; ein Gierwinkel des Fahrzeugs; ein Rollwinkel des Fahrzeugs; ein Nickwinkel des Fahrzeugs; ein Höhenprofil einer Straße, beispielsweise ein Neigungsniveau der Straße; und/oder eine Wettersituation wie z.B. Regen, Schnee, Nacht, Sonnenschein, Trockenheit, Luftfeuchtigkeit, oder Umfeldhelligkeit.

12. Verfahren, das umfasst:
- Aussenden von Laserlicht mittels eines Laserscanners entlang einer ersten Scanachse,
- Empfangen von Steuerdaten, die indikativ für einen Fahrzustand eines Fahrzeugs sind,
- Ansteuern des Laserscanners, um in Abhängigkeit vom Fahrtzustand des Fahrzeugs einen aktiven Betriebsmodus aus einer Vielzahl von Betriebsmodi auszuwählen, und
- Durchführen einer Abstandsmessung von Objekten im Umfeld basierend auf dem Laserlicht,.
wobei das Verfahren von der Vorrichtung (100) nach einem der Ansprüche 1-11 ausgeführt wird.

## Claims

1. Apparatus (100), comprising:
- a laser scanner (101) having a laser light source (111), wherein the laser scanner (101) is set up to scan laser light from the laser light source (111) along a first scan axis (301, 302),
- an interface, which is set up to receive control data (104, 200) that are indicative of a driving state (202) of a vehicle (99), and
- at least one computing unit (102), which is set up to actuate the laser scanner (101) to select an active operating mode (81, 82) from a multiplicity of operating modes (81, 82) in dependence on the driving state (202) of the vehicle (99),
wherein the at least one computing unit (102) is furthermore set up to perform a distance measurement of objects in the surroundings of the apparatus (100) based on the laser light,
wherein the laser scanner (101) is set up to furthermore scan the laser light (191, 192) along a second scan axis (301, 302), which differs from the first scan axis (301, 302),
wherein the laser scanner (101) furthermore has at least one actuator (114) and a first deflection unit (112) and a second deflection unit, which are set up to be travelled sequentially by the laser light,
wherein the actuator (114) is set up to bring about a first movement of the first deflection unit (112) in accordance with the first scan axis (301, 302) and a second movement of the second deflection unit (112) in accordance with the second scan axis (301, 302), wherein the first movement and the second movement are temporally superposed,
wherein the first deflection unit (112) has a fibre (701) and an optical element (798) which is connected to a movable end (705) of the fibre (701),
wherein the optical element (798) is a mirror having a mirror surface (798A) and a rear side (798B), and wherein the fibre (701) extends away from the rear side (798B).

2. Apparatus (100) according to Claim 1,
wherein the multiplicity of operating modes (81, 82) implement scan regions (315) with different dimensions and/or orientations along the first scan axis (301, 302) and optionally a second scan axis (301, 302).

3. Apparatus (100) according to Claim 1 or 2,
wherein the multiplicity of operating modes (81, 82) implement scan regions (315) with different orientations along the first scan axis (301, 302) and optionally along a second scan axis (301, 302),
wherein the different orientations of the scan regions (351) are defined by different arrangements of the centre of the scan regions (351),
wherein the laser scanner (101) furthermore has at least one actuator (114), which is set up to bring about the arrangements of the centre of the scan regions (351) with a DC component of a driver signal.

4. Apparatus (100) according to Claim 2 or 3,
wherein the driving state (202) of the vehicle comprises at least one of a pitch angle, a roll angle and/or a yaw angle,
wherein the computing unit (102) is set up to compensate the pitch angle, the roll angle and/or the yaw angle of the vehicle (99) using the orientation of the scan regions (315).

5. Apparatus (100) according to one of the preceding claims,
wherein the multiplicity of operating modes (81, 82) implement different pulse energies of pulses of the laser light (191, 192) and/or different repetition rates of the pulses of the laser light (191, 192).

6. Apparatus (100) according to one of the preceding claims,
wherein the multiplicity of operating modes (81, 82) implement different frequency bands for a repetition rate of pulses of the laser light (191, 192) optionally with a probability density function varying in the frequency domain.

7. Apparatus (100) according to one of the preceding claims,
wherein the multiplicity of operating modes (81, 82) implement different scanning point densities (321) along the first scan axis (301, 302).

8. Apparatus (100) according to Claim 7,
wherein the scanning point density (321) varies along the first scan axis (301, 302) for a first operating mode (81, 82) of the multiplicity of operating modes (81, 82), wherein optionally the scanning point density (321) is constant along the first scan axis (301, 302) for a second operating mode (81, 82) of the multiplicity of operating modes (81, 82).

9. Apparatus (100) according to one of the preceding claims,
wherein the laser scanner (101) furthermore has at least one actuator (114), which is set up to bring about a first movement of a deflection unit of the laser scanner in accordance with the first scan axis (301, 302) with a change in the scanning amplitude during a scanning operation which corresponds to a scan region,
wherein the multiplicity of operating modes (81, 82) implement different rates of change of the scanning amplitude of the first movement.

10. Apparatus (100) according to one of the preceding claims,
wherein the first scan axis (301, 302) is directed vertically with respect to the vehicle.

11. Apparatus (100) according to one of the preceding claims,
wherein the driving state (202) is selected from the following group: a type of road, such as a motorway, urban road, country road, state road; the speed of the vehicle, for example in kilometres per hour; a pitch angle of the vehicle; a roll angle of the vehicle; a yaw angle of the vehicle; a height profile of a street, for example an incline of the street; and/or a weather situation such as rain, snow, night, sunshine, dryness, humidity or ambient brightness.

12. Method comprising:
- emitting laser light using a laser scanner along a first scan axis,
- receiving control data that are indicative of a vehicle state of a vehicle,
- actuating the laser scanner to select an active operating mode from a multiplicity of operating modes in dependence on the driving state of the vehicle, and
- performing a distance measurement of objects in the surroundings based on the laser light,
wherein the method is performed by the apparatus (100) according to one of Claims 1-11.

## Revendications

1. Dispositif (100), qui comprend :
- un scanner laser (101) avec une source de lumière laser (111), dans lequel le scanner laser (101) est aménagé pour balayer de la lumière laser de la source de lumière laser (111) le long d'un premier axe de balayage (301, 302),
- une interface, qui est aménagée pour recevoir des données de commande (104, 200), qui indique un état de conduite (202) d'un véhicule (99), et
- au moins une unité de calcul (102), qui est aménagée pour commander le scanner laser (101) pour sélectionner un mode de fonctionnement actif (81, 82) à partir d'une pluralité de modes de fonctionnement (81, 82) en fonction de l'état de conduite (202) du véhicule (99),
dans lequel l'au moins une unité de calcul (102) est aménagée en outre pour réaliser sur la base de la lumière laser une mesure de distance d'objets dans l'environnement du dispositif (100),
dans lequel le scanner laser (101) est aménagé pour balayer en outre la lumière laser (191, 192) le long d'un deuxième axe de balayage (301, 302), qui est différent du premier axe de balayage (301, 302),
dans lequel le scanner laser (101) présente en outre au moins un actionneur (114) et une première unité de renvoi (112) et une deuxième unité de renvoi, qui sont aménagées pour être traversées séquentiellement par la lumière laser,
dans lequel l'actionneur (114) est aménagé pour entraîner un premier déplacement de la première unité de renvoi (112) conformément au premier axe de balayage (301, 302) et un deuxième déplacement de la deuxième unité de renvoi (112) conformément au deuxième axe de balayage (301, 302),
dans lequel le premier déplacement et le deuxième déplacement se chevauchent dans le temps,
dans lequel la première unité de renvoi (112) présente une fibre (701) et un élément optique (798) relié à une extrémité mobile (705) de la fibre (701),
dans lequel l'élément optique (798) est un miroir avec une surface de miroir (798A) et une face arrière (798B), et
dans lequel la fibre (701) s'éloigne de la face arrière (798B).

2. Dispositif (100) selon la revendication 1,
dans lequel la pluralité de modes de fonctionnement (81, 82) implémentent des zones de balayage (315) avec différentes dimensions et/ou orientations le long du premier axe de balayage (301, 302) et en option d'un deuxième axe de balayage (301, 302).

3. Dispositif (100) selon la revendication 1 ou 2,
dans lequel la pluralité de modes de fonctionnement (81, 82) implémentent des zones de balayage (315) avec différentes orientations le long du premier axe de balayage (301, 302) et en option le long d'un deuxième axe de balayage (301, 302),
dans lequel les différentes orientations des zones de balayage (351) sont définies par différents agencements du centre des zones de balayage (351),
dans lequel le scanner laser (101) présente en outre au moins un actionneur (114) qui est aménagé pour entraîner les agencements du centre des zones de balayage (351) avec un composant DC d'un signal pilote.

4. Dispositif (100) selon la revendication 2 ou 3,
dans lequel l'état de conduite (202) du véhicule comprend au moins un parmi un angle de lacet, un angle de roulis et/ou un angle de tangage,
dans lequel l'unité de calcul (102) est aménagée pour compenser l'angle de lacet, l'angle de roulis et/ou l'angle de tangage du véhicule (99) au moyen de l'orientation des zones de balayage (315).

5. Dispositif (100) selon l'une quelconque des revendications précédentes,
dans lequel la pluralité de modes de fonctionnement (81, 82) implémentent différentes énergies d'impulsion d'impulsions de la lumière laser (191, 192) et/ou différents taux de rafraîchissement des impulsions de la lumière laser (191, 192).

6. Dispositif (100) selon l'une quelconque des revendications précédentes,
dans lequel la pluralité de modes de fonctionnement (81, 82) implémentent différentes bandes de fréquences pour un taux de rafraîchissement d'impulsions de la lumière laser (191, 192) en option avec une fonction de densité de probabilité variant dans l'espace fréquentiel.

7. Dispositif (100) selon l'une quelconque des revendications précédentes,
dans lequel la pluralité de modes de fonctionnement (81, 82) implémentent différentes densités de point de balayage (321) le long du premier axe de balayage (301, 302).

8. Dispositif (100) selon la revendication 7,
dans lequel pour un premier mode de fonctionnement (81, 82) de la pluralité de modes de fonctionnement (81, 82), la densité de point balayage (321) varie le long du premier axe de balayage (301, 302),
dans lequel en option pour un deuxième mode de fonctionnement (81, 82) de la pluralité de modes de fonctionnement (81, 82), la densité de point de balayage (321) est constante le long du premier axe de balayage (301, 302).

9. Dispositif (100) selon l'une quelconque des revendications précédentes,
dans lequel le scanner laser (101) présente en outre au moins un actionneur (114), qui est actionné pour entraîner un premier déplacement d'une unité de renvoi du scanner laser conformément au premier axe de balayage (301, 302) avec une modification de l'amplitude de balayage pendant une opération de balayage, qui correspond à une zone de balayage,
dans lequel la pluralité de modes de fonctionnement (81, 82) implémentent différents taux de variation de l'amplitude de balayage du premier déplacement.

10. Dispositif (100) selon l'une quelconque des revendications précédentes,
dans lequel le premier axe de balayage (301, 302) est orienté verticalement par rapport au véhicule.

11. Dispositif (100) selon l'une quelconque des revendications précédentes,
dans lequel l'état de conduite (202) est sélectionné dans le groupe suivant : un type de route, par exemple autoroute, voie urbaine, route départementale, route nationale ; la vitesse du véhicule, par exemple en kilomètres par heure ; un angle de lacet du véhicule ; un angle de roulis du véhicule ; un angle de tangage du véhicule ; un profil de hauteur d'une route, par exemple un niveau d'inclinaison de la route ; et/ou une situation météorologique comme par exemple pluie, neige, nuit, soleil, sécheresse, humidité atmosphérique, ou luminosité de l'environnement.

12. Procédé, qui comprend :
- l'émission de lumière laser au moyen d'un scanner laser le long d'un premier axe de balayage,
- la réception de données de commande, qui indiquent un état de conduite d'un véhicule,
- la commande du scanner laser pour sélectionner un mode de fonctionnement actif à partir d'une pluralité de modes de fonctionnement en fonction de l'état de conduite du véhicule, et
- la réalisation d'une mesure de distance d'objets dans l'environnement sur la base de la lumière laser,
dans lequel le procédé est réalisé par le dispositif (100) selon l'une quelconque des revendications 1-11.
